# EUROPÄISCHE PATENTSCHRIFT

(11) **EP 0 626 005 B1**
(45) Veröffentlichungstag und Bekanntmachung des Hinweises auf die Patenterteilung: **10.12.1997**
(21) Anmeldenummer: 93903932.7
(22) Anmeldetag: 09.02.1993
(51) Int. Cl.: C11D 11/00, C11D 11/02, B01D 1/18, F26B 21/04

(54) **STAUBARME ANIONTENSIDKONZENTRATE IN PULVER- BEZIEHUNGSWEISE GRANULATFORM MIT VERBESSERTEM AUFLÖSEVERMÖGEN**
POWDERED OR GRANULATED, DUST-FREE CONCENTRATES OF ANIONIC SURFACE ACTIVE AGENTS WITH IMPROVED DISSOLVABILITY
CONCENTRES PULVERULENTS OU GRANULES, SANS POUSSIERE, DE TENSIOACTIFS ANIONIQUES A SOLUBILITE AMELIOREE

(30) Priorität: 12.02.1992 DE 4204090; 12.02.1992 DE 4204035; 27.02.1992 DE 4206050; 12.10.1992 DE 4234376
(43) Veröffentlichungstag der Anmeldung: 30.11.1994
(73) Patentinhaber: Henkel Kommanditgesellschaft auf Aktien, 40191 Düsseldorf (DE)
(72) Erfinder: FUES, Johann, D-4048 Grevenbroich 5 (DE); RÄHSE, Wilfried, D-4000 Düsseldorf 13 (DE); PAATZ, Kathleen, D-4000 Düsseldorf 13 (DE); POLY, Wolfgang, D-4000 Düsseldorf 13 (DE); GRUBER, Bert, D-5012 Bedburg (DE); SYLDATH, Andreas, D-4000 Düsseldorf 13 (DE); WELPER, Sven, D-4300 Essen 1 (DE); PATTBERG, Herbert, D-4010 Hilden (DE)
(86) Internationale Anmeldenummer: EP9300302
(87) Internationale Veröffentlichungsnummer: WO9316165

(56) Entgegenhaltungen:
- WO-A-92/05849

## Beschreibung

Die Erfindung betrifft eine neue Anbietungsform von wasch- und/oder reinigungsaktiven Aniontensidkonzentraten in Form staubfreier fester rieselfähiger Pulver und/oder Granulate. Die Erfindung hat sich dabei insbesondere die Aufgabe gestellt, wasch- und/oder reinigungsaktive Aniontensidverbindungen in einer Anbietungsform verfügbar zu machen, die in der Kombination der Stoffeigenschaften in dieser Art bisher nicht zur Verfügung stehen. Die Erfindung will dabei insbesondere feinpartikuläre Pulver und/oder Granulate mit beliebig einstellbarem Aniontensidgehalt - der praktisch bis zum reinen Tensid beziehungsweise Tensidgemisch reichen soll - zur Verfügung stellen, die sich durch Staubarmut beziehungsweise Staubfreiheit auszeichnen, hohe und dabei einstellbare Schüttdichten aufweisen, die deutlich über 150 g/1 liegen können und gleichzeitig aber ein optimiertes Lösungsverhalten in wäßrigen Wasch- und/oder Reinigungsflotten besitzen.

Die Erfindung will in einer wichtigen Ausführungsform solche Aniontenside und/oder Aniontensidgemische zur Verfügung stellen, die sich durch mengenmäßig praktisch beliebige Verfügbarkeit auszeichnen, dabei auf niederem Niveau der Gestehungspreise liegen können, den heutigen hochwertigen Anforderungen an ökologisch verträgliche Tenside beziehungsweise Tensidkomponenten optimal entsprechen und damit insbesondere geeignet sind, einen wesentlichen Beitrag zum heute angestrebten Austausch der Aniontenside auf Basis von Alkylbenzolsulfonaten zu leisten.

In besonderen Ausführungsformen geht die erfindungsgemäße Aufgabenstellung davon aus, bekannte Aniontenside aus Ausgangsmaterialien pflanzlichen und/oder tierischen Ursprungs als wesentliche Komponenten der neuen nicht staubenden Aniontensidkonzentrate verfügbar zu machen. Die Erfindung ist aber nicht auf diese Ausgangsstoffe pflanzlichen und/oder tierischen Ursprungs eingeschränkt. Auch Tensidverbindungen synthetischen Ursprungs, insbesondere ökologisch verträgliche Verbindungen synthetischen Ursprungs, sind bevorzugte Haupt- und/oder Mischungskomponenten im Sinne des erfindungsgemäßen Handelns.

Die Schwierigkeiten der erfindungsgemäßen Aufgabenstellung werden an der nachfolgenden Problematik verständlich, die als beispielhafte Darstellung zu verstehen ist: Das Fachwissen der Wasch- und/oder Reinigungsmittel kennt heute eine Vielzahl von ökologisch akzeptablen mengenmäßig hinreichend verfügbaren und auch hinreichend preiswerten Aniontensidkomponenten aus dem Bereich der Sulfate und/oder Sulfonate oleophiler organischer Komponenten wie Fettsäuren, Fettalkohole, hinreichend langkettige Olefine und/oder Alkane und dergleichen. Als typische Beispiele seien benannt die Klasse der Halbester der Schwefelsäure mit Fettalkoholen, insbesondere längerkettigen gesättigten Fettalkoholen, die unter dem Begriff der Fettalkoholsulfate (FAS) eine wichtige Rolle spielen, die sich davon ableitenden Fettalkoholethersulfate (FAES), die durch Alkoxylierung, insbesondere Ethoxylierung und/oder Propoxylierung von Fettalkoholen und nachfolgende Sulfatierung der so gebildeten Alkoholkomponenten hergestellt werden können. Weitere wichtige Vertreter heute üblicher Aniontenside fallen in die Klasse der sulfonierten Fettsäuren beziehungsweise ihrer waschaktiven Salze sowie der zugehörigen sulfonierten Fettsäureester. Bekannte Tenside aus der zuletzt genannten Stoffklasse sind die alpha-Sulfofettsäuremethylester beziehungsweise ihre Salze (MES) sowie die sich durch Esterspaltung und/oder unmittelbare alpha-Sulfonierung von Fettsäuren daraus ableitenden alpha-sulfonierten Carbonsäuren beziehungsweise ihre waschaktiven Salze, die unter dem Begriff "Di-Salze" bekannt geworden sind. Alle diese hier lediglich beispielhaft aufgezählten anion-tensidischen Verbindungen enthalten längerkettige organische Reste, beispielsweise des Bereiches von C8-24, insbesondere C12-18 und sind bekannte Mischungskomponenten in Wasch- und Reinigungsmitteln, in denen sie üblicherweise mit weiteren Tensiden, insbesondere niotensidischen Charakters, mit organischen und/oder anorganischen Gerüst- beziehungsweise Buildersubstanzen sowie weiteren üblichen Mischungskomponenten verwendet werden.

Bis zum heutigen Tage bereitet es beträchtliche Schwierigkeiten, Aniontensidkonzentrate dieser Art - aber auch Aniontenside synthetischen Ursprungs von der Art des ABS - in Form fester rieselfähiger und insbesondere staubfreier Pulver und/oder Granulate zur Verfügung zu stellen, die gleichzeitig ein hohes Schüttgewicht und das von der Praxis geforderte hohe und rasche Auflösungsvermögen in wäßrigen Flotten besitzen. Dabei wäre für die breite Einsetzbarkeit von beispielsweise pflanzlich und/oder tierisch basierten Aniontensiden auf Sulfat- und/oder Sulfonatbasis die Anbietungsform als staubfreies schütt- und rieselfähiges Feinpulver beziehungsweise Granulat mit hoher Auflösegeschwindigkeit die ideale Lösung. Wäßrige Pasten, wie sie bei der Herstellung der hier betroffenen aniontensidischen Verbindungen als primäre Reaktionsprodukte häufig anfallen, bringen für die technische Verarbeitung vielgestaltige Probleme, sowohl aus Überlegungen zur Stabilität als zum Handling dieser Anbietungsform. Alkylsulfatpasten sind einerseits hydrolysegefährdet, zum anderen zeigen alle Aniontensidpasten starke Viskositätsschwankungen in Abhängigkeit vom Feststoffgehalt der jeweiligen wäßrigen Paste bis hin zur Unmöglichkeit, die wäßrigen Pasten durch Pumpen und Leitungen zu transportieren und damit beispielsweise zu dosieren.

Es ist bei diesem Sachverhalt nicht verwunderlich, daß zahlreiche Vorschläge bestehen, Aniontenside der erfindungsgemäß betroffenen Art in Feststofform zu überführen. Insbesondere werden hier Compounds vorgeschlagen, die die Aniontenside in Abmischung mit Dispergatoren, Lösungsvermittlern und/oder einfach wasserlöslichen Salzen enthalten. Notwendig ist die Mitverwendung dieser Hilfsstoffe im Zusammenhang mit der Herstellung trockener Anbietungsformen nach dem Stand der Technik, weil die bisherige Trocknungstechnologie durch Heißtrocknung in Sprühtürmen und/oder im Wirbelbett zu Aniontensid-Produkten eingeschränkter Brauchbarkeit führt. Schwierigkeiten liegen insbesondere im Folgenden: Die Schwerlöslichkeit und Vergelungstendenz wichtiger Tensidkomponenten führt auch bei ihrer Überführung in einen feinpartikulären Trockenzustand zu vergleichsweise verzögert löslichen Trockenpulvern. Die Herstellung solcher Trockenpulver beispielsweise im Sprühturm führt beim Einsatz auch nur mäßiger Gehalte an Aniontensid im Einsatzgut zu teilweise extrem stark staubenden Pulvern. Hierdurch werden Sekundär-Störungen in beträchtlichem Ausmaß ausgelöst, beispielsweise wird bei Herstellung und Handhabung solcher Trockenpulver das Anlegen von Atemschutzmasken notwendig.

Eine besondere Schwierigkeit liegt aber darüber hinaus in der nachfolgenden Erscheinung: Aniontensidverbindungen der geschilderten Art können durch die an sich bisher bekannte Trocknungstechnologie in Heißluft beziehungsweise in heißen Brenngasen in der heute üblichen Sprühturm-Technologie nur zu Pulverprodukten niedrigen Schüttgewichts aufgearbeitet werden. Auch die Mitverwendung von Hilfsstoffen, beispielsweise anorganischen Salzen als Beschwerungsmittel, führt nur zu einer beschränkten Anhebung der einstellbaren Schüttdichten des trockenen Tensidpulvers. Häufig liegen die Schüttdichten unter 100 g/l. Bei dem Versuch der Verfahrensoptimierung können beispielsweise im Fall der trockenen Pulver auf TAS-Basis Schüttdichten von maximal etwa 130 g/l eingestellt werden. Di-Salze der zuvor geschilderten Art lassen sich auch in Abmischung mit Hilfsstoffen als Trockenpulver nicht einmal mit solchen Schüttdichten erzeugen. Hier liegt die großtechnisch erreichbare Schüttdichte in der Regel deutlich unter 100 g/l.

Die Anmelderin beschreibt in ihrer älteren Anmeldung DE-A 40 30 688 ein Verfahren zur Gewinnung feinteiliger fester schütt- beziehungsweise rieselfähiger Wertstoffe oder Wertstoffgemische für Netz-, Wasch- und/oder Reinigungsmittel aus ihren wäßrigen Zubereitungen, wobei überhitzter Wasserdampf als trocknender Heißgasstrom eingesetzt und dabei die Trocknung des partikulären Gutes vor dessen Gefährdung durch thermische Einwirkung abgebrochen wird. Erforderlichenfalls wird dabei die lagerbeständige Schütt- beziehungsweise Rieselfähigkeit des derart partiell aufgetrockneten Gutes durch Zusatz solcher Mischungsbestandteile sichergestellt, die zur Bindung begrenzter Wassermengen befähigt sind.

In den älteren deutschen Patentanmeldungen der Anmelderin gemäß DE-A 42 04 035 und DE-A 42 04 090 werden vereinfachte und verbesserte Verfahren zur Trocknung von Wertstoffen für Wasch- und/oder Reinigungsmittel mit überhitztem Wasserdampf beschrieben. Die Lehre der im nachfolgenden geschilderten vorliegenden Erfindung knüpft an die Offenbarungen dieser genannten älteren Schutzrechtsanmeldungen der Anmelderin an. Zum Zwecke der Erfindungsoffenbarung wird hiermit die Lehre dieser drei älteren Anmeldungen ausdrücklich auch zum Gegenstand der vorliegenden Erfindungsoffenbarung gemacht.

### Gegenstand der Erfindung

Gegenstand der vorliegenden Erfindung sind die im nachfolgenden geschilderten Aniontensidkonzentrate in Form fester rieselfähiger Pulver und/oder Granulate, die auch als Compounds in Abmischung mit weiteren für den Einsatz in Wasch- und/oder Reinigungsmitteln geeigneten Hilfs- und/oder Wertstoffen vorliegen können und durch Auftrocknung entsprechender wasserhaltiger Zubereitungen unter Ausbildung der Pulver- und/oder Granulatform hergestellt worden sind.

Im Sinne der erfindungsgemäßen Lehre sind diese Aniontensidkonzentrate jetzt in einer ersten Ausführungsform dadurch gekennzeichnet, daß sie die Aniontensidverbindungen in Form ihrer wasch- und/oder reinigungsaktiven Salze bei einem Aniontensidgehalt von wenigstens 30 Gew.-% enthalten, dabei Schüttdichten von wenigstens etwa 150 g/l aufweisen und durch Heißtrocknung der wasserhaltigen Zubereitungen mit überhitztem Wasserdampf als Trocknungsgas hergestellt worden sind. Bevorzugte Schüttdichten dieser Aniontensidkonzentrate liegen bei oder oberhalb etwa 200 g/l, vorzugsweise bei oder oberhalb etwa 300 g/l und insbesondere bei wenigstens etwa 350 g/l. Dabei ist jedoch das durch Sprühtrocknung einer wäßrigen Fettalkoholsulfatpaste (Wassergehalt ca. 41 Gew.-% und vermischt mit 5 Gew.-% Soda) in überhitztem Wasserdampf als Trocknungsgasstrom erhaltene Trockenprodukt mit einem Restwassergehalt von ca. 6 % hier ausgeschlossen.

Die erfindungsgemäßen Aniontensidkonzentrate zeichnen sich weiterhin dadurch aus, daß sie praktisch völlig staubfrei sind. Sie können dabei in einer bevorzugten Ausführungsform dadurch gekennzeichnet sein, daß sie zur Einstellung dieser Stoffeigenschaften - auch eines feinsten Partikelgutes - als Mischungsbestandteile staubbindende Hilfs- und/oder Wertstoffe enthalten. Neben oder anstelle dieser Maßnahme kann erfindungsgemäß die Staubfreiheit auch mittels Regulierung des Restwassergehaltes im schütt- und rieselfähigen Gut vorgesehen sein.

In einer wichtigen weiteren Ausführungsform betrifft die Erfindung Aniontensidkonzentrate der zuvor definierten Art in Form eines schütffähigen kornförmigen Gutes - im nachfolgenden auch als "Trägerbead" bezeichnet - das durch eine saugfähig poröse Innenstruktur der kornförmigen Trägerbeads gekennzeichnet ist.

Die Erfindung betrifft in einer weiteren Ausführungsform die Verwendung dieser Aniontensidkonzentrate in Trockenform als Bestandteil von Netz-, Waschund/oder Reinigungsmitteln in fester Anbietungsform, insbesondere zum wenigstens partiellen Austausch gegen Aniontenside auf ABS-Basis.

### Einzelheiten zur Erfindung

Es hat sich überraschenderweise gezeigt, daß es durch Einhaltung der erfindungsgemäß definierten Elementenkombination und gegebenenfalls unter Berücksichtigung der nachfolgend im einzelnen geschilderten Zusatzelemente möglich wird, feste Aniontenside und entsprechende Aniontensidkonzentrate mit der angestrebten Summe von Produkteigenschaften auszurüsten beziehungsweise herzustellen, die seit Jahrzehnten von der Fachwelt gewünscht sind, bisher in dieser Kombination aber nicht verwirklicht werden konnten. Die aniontensidischen Materialien können in feinster Pulverform durch Sprühtrocknung hergestellt werden. Die dabei anfallenden Pulver sind ebenso staubfrei wie die nach alter Technologie als praktisch einziger Ausweg angesehenen Tensidgranulate, deren Herstellung aus zuvor gewonnenen Pulvern nach alter Technologie einen zusätzlichen Arbeitsschritt benötigte. Die erfindungsgemäß definierten Aniontensidpulver zeichnen sich gleichzeitig durch hohe Schüttdichten aus, die eine Handhabung, die Verpackung und den Transport dieser Angebotsform sinnvoll und wirtschaftlich tragbar machen. Gleichzeitig sind die einstellbaren hohen Schüttgewichte im Sinne der heute gewünschten Herstellung von trockenen Anbietungsformen für Wasch- und Reinigungsmittel als sogenannte Schwerpulver wichtig für unmittelbar brauchbare Mischungskomponenten. Nach allen Erfahrungen der alten Technologie sollte eine solche Anbietungsform der Aniontensidfeststoffe dann aber mit dem Nachteil einer erschwerten oder wenigstens verzögerten Auflösbarkeit in wäßrigen Flotten verbunden sein. Erfindungsgemäß besteht dieser Nachteil nicht mehr oder ist zumindestens in einem solchen Ausmaß abgemildert, daß Einschränkungen für die praktische Handhabung und Verwertung der erfindungsgemäß definierten Aniontensidkonzentrate nicht mehr gegeben sind.

Der Gehalt der erfindungsgemäß definierten Aniontensidkonzentrate an waschoder reinigungsaktiven Tensiden liegt bei wenigstens etwa 30 Gew.-% bezogen auf feinkörniges Feststoffgut. Grundsätzlich kann der Tensidfeststoff als solcher das Pulver- beziehungsweise Granulatkorn bilden. Dabei ist allerdings in der Praxis zu berücksichtigen, daß aus der Herstellung der Aniontenside im großtechnischen Maßstab in der Regel beschränkte Mengen an Restkomponenten anorganische Salze, nicht-sulfierte Restanteile und dergleichen als in der Praxis akzeptable beziehungsweise irrelevante Verunreinigung im Tensidfeststoff vorliegen. Erfindungsgemäß sind dementsprechend Tensidgranulate besonders bevorzugt, deren Aktivgehalt an Aniontensiden im Bereich von etwa 35 bis 95 Gew.-% liegt. Innerhalb dieses Bereiches können wieder solche Stoffe beziehungsweise Stoffgemische bevorzugt sein, in denen die Tensidkomponenten mehr als 50 Gew.-% ausmachen - Gew.-% wie zuvor auf feinkörniges Feststoffgut bezogen. Bevorzugte Obergrenzen des Aniontensidgehaltes können in Abstimmung mit dem jeweils zu gewinnenden Wertstoffgemisch bei etwa 75 bis 95 Gew.-%, zum Beispiel also bei etwa 80, 85 oder 90 Gew.-% Aniontensid - liegen. Mitbestimmend können hier die Grundgesetzmäßigkeiten der Trocknung mittels überhitztem Wasserdampf als Trocknungsgas sein, die in den genannten älteren Anmeldungen der Anmelderin und insbesondere in der DE-A 40 30 688 geschildert sind und hier nur noch einmal kurz zum besseren Verständnis der Erfindung ausgeführt werden:

Der Temperaturverlauf in dem aufzutrocknenden Guttropfen unterscheidet sich bekanntlich von konventionellen Trocknungsverfahren mittels Heißluft und/oder heißen Brenngasen beim Einsatz von überhitztem Wasserdampf als Trocknungsmedium wie folgt: Beim Eintragen des zu trocknenden Gutes mit Eigentemperaturen unter 100°C in die Atmosphäre des überhitzten Wasserdampfs findet durch Kondensation des Heißdampfes auf dem kühleren Einsatzgut und Abgabe der Kondensationswärme an das zu trocknende Gut eine spontane Aufheizung des wäßrigen Tropfens auf die Siedetemperatur des Wassers unter Arbeitsbedingungen statt. Beim Arbeiten unter Normaldruck bedeutet das also ein Aufheizen der Guttemperatur auf etwa 100°C. Diese Siedetemperatur wird als Mindesttemperatur während des gesamten Trocknungszeitraumes im Guttropfen beibehalten. In Abhängigkeit von der Schmelztemperatur des jeweils eingesetzten Aniontensides beziehungsweise Aniontensidgemisches kann die Mitverwendung von Hilfsmitteln zweckmäßig oder notwendig sein, die im Temperaturbereich von 100°C fest sind und damit die lagerbeständige Schütt- und Rieselfähigkeit des derart aufgetrockneten kornförmigen Gutes sicherstellen. Diese Hilfsstoffe können dabei, wie im nachfolgenden noch geschildert wird, ihrerseits ausgewählte Wertstoffe für den geplanten Einsatzzweck oder Inertstoffe sein. Sie können dabei auf Basis organischer und/oder anorganischer Mischungskomponenten aufgebaut und dabei wasserlöslich und/oder wasserunlöslich sein. Im Rahmen der Sprühtrocknung kann damit auch beim Einsatz von überhitztem Wasserdampf als Trocknungsgas das aus der konventionellen Sprühtrocknung bekannte Ergebnis sichergestellt werden, das fließfähige nasse Einsatzmaterial in feiner Partikelform ohne nennenswertes Verkleben der Partikel miteinander oder wenigstens unter einer steuerbaren Einstellung der Partikelgröße aufzutrocknen.

Die in diesen Feststoffen vorliegenden anionischen Tensidkomponenten können dabei bestimmte individuelle Wertstoffe der genannten Art sein, ebenso können aber praktisch beliebige Abmischungen von Wertstoffen der hier angesprochenen Tensidklasse vorliegen. Der Begriff des "Tensidgemisches" ist dabei in mehrfacher Weise zu verstehen: Schon innerhalb einer ausgewählten Klasse - beispielsweise der Fettalkoholsulfate und/oder Fettsäuresulfonate liegt in der Regel kein individualisierter Stoff im Sinne einer ausgewählten Verbindung vor. Die Verarbeitung der Einsatzstoffe pflanzlichen und/oder tierischen Ursprungs aber auch die Verarbeitung entsprechender synthetischer Ausgangschemikalien führt zu Wertstoffen der betroffenen Art einer gewissen Bandbreite in der Zusamensetzung - beispielsweise bezüglich der C-Zahl in den Fettalkohol- und/oder Fettsäureresten.

Der Begriff der Tensidgemische beinhaltet insbesondere aber im Sinne der erfindungsgemäßen Definition auch die gezielte Vereinigung von Aniontensiden grundsätzlich unterschiedlicher Struktur. So kann es beispielsweise zweckmäßig sein, die klassischen waschaktiven Aniontenside auf TAS-Basis mit anion-tensidischen Dispergatoren zu verschneiden, die beispielsweise auf Basis vergleichsweise kürzerkettiger Sulfate und/oder Sulfonate aufgebaut sein können. Andere Beispiele für wenigstens zwei unterschiedliche Aniontensidtypen sind Abmischungen von einerseits Di-Salzen - d.h. alpha-Sulfofettsäuresalzen, beispielsweise der Kettenlänge von C14-20 - sowie andererseits Aniontensiden auf Basis von Fettalkoholsulfaten, zum Beispiel auf TAS-Basis und/oder auf Basis von Alkylestersulfonaten, insbesondere Methylestersulfonaten (MES).

Zur Lösung der Teilaufgabe staubfreie Pulver und/oder Granulate zur Verfügung zu stellen, sieht die Erfindung insbesondere zwei Lösungsvorschläge vor, die auch miteinander in Kombination eingesetzt werden können. Der eine Ansatz geht dabei von dem Vorschlag aus, gezielten Gebrauch von dem Restwassergehalt des zu trocknenden Gutes zu machen. Je nach der Beschaffenheit des im Einzelfall vorliegenden Feststoffgutes kann durch Regelung des Restwassers im Trockengut eine Staubfreiheit wenigstens weitgehend zugänglich werden.

Im einzelnen gelten hier die Zahlenwerte der eingangs genannten und auch zur vorliegenden Erfindungsoffenbarung gemachten Angaben der DE-A 40 30 688. Bevorzugte Restwassergehalte liegen im Bereich von etwa 1 bis 20 Gew.-%, vorzugsweise bei höchstens etwa 10 Gew.-% und insbesondere unter 5 bis 7 Gew.-%. Besonders geeignet können Restwassergehalte im Bereich bis 3 oder 4 Gew.-% sein, wobei im allgemeinen Werte im Bereich von etwa 1 bis 3 Gew.-% befriedigende Ergebnisse liefern. Wie die Beispiele zeigen, können aber auch Werte der Restfeuchte unterhalb 1 Gew.-% eingestellt werden.

In einer wichtigen Ausführungsform sieht die Lehre der Erfindung allerdings vor, daß die Aniontensidkonzentrate Zusatzkomponenten in wechselnden Mengen enthalten können, die in der hier diskutierten Ausführungsform primär der Beseitigung der Staubbildung dienen beziehungsweise als staubbindende Hilfsmittel anzusehen sind. Dabei umfaßt die Erfindung hier jedoch ausdrücklich die Einarbeitung solcher Hilfsstoffe, die ihrerseits Wertstoffe im Sinne des Einsatzes in Wasch- und/oder Reinigungsmitteln beziehungsweise des gemeinsamen Einsatzes mit den jeweils betroffenen Aniontensidkomponenten darstellen.

In dieser Ausführungsform kennzeichnen sich die feinpartikulären schütt- und rieselfähigen Aniontensidkonzentrate der Erfindung dadurch, daß sie als staubbindende Hilfs- und/oder Wertstoffe Mischungskomponenten in bevorzugt homogener Abmischung enthalten, die bei Raumtemperatur - gegebenenfalls in Gegenwart beschränkter Restwassermengen - flüssige und/oder wenigstens klebrige Beschaffenheit besitzen und dabei bevorzugt in solchen Mengen in das Tensidkonzentrat eingearbeitet sind, daß die geforderte Staubfreiheit gewährleistet ist, ohne die Schütt- und Rieselfähigkeit nachhaltig zu behindern.

Geeignete staubbindende Hilfsstoffe können insbesondere bei Raumtemperatur wasserlösliche, wasseremulgierbare und/oder wasserquellbare Mischungskomponenten sein, die ihrerseits Monomerverbindungen, Oligomerverbindungen und/oder geeignet ausgesuchte Polymerverbindungen sind. Bevor auf charakteristische Beispiele für solche Hilfs- beziehungsweise Wertstoffe als Mischungskomponenten eingegangen wird, sei das der erfindungsgemäßen Lehre hier zugrundeliegende Arbeitskonzept erläutert: Die Hilfsstoffe lassen sich aufgrund ihrer Wasserlöslichkeit oder Wasseremulgierbarkeit, auf jeden Fall aber auch aufgrund ihrer Wasserquellbarkeit homogen in das aufzutrocknende Wirkstoffgemisch auf Aniontensidbasis einarbeiten. Wird in der nachfolgenden Trocknungsstufe im Sinne der Heißdampftrocknung aus den eingangs genannten und zur Vervollständigung der Erfindungsoffenbarung zitierten älteren Anmeldungen der Anmelderin das wasserhaltige Einsatzgut dann im überhitzten Wasserdampfstrom partikulär und insbesondere feinpartikulär zerteilt und unter der Einwirkung des Heißdampfes getrocknet, so ist die zuverlässige und gleichmäßige Einmischung dieser staubbindenden Hilfsmittel in jedem Partikel in gleichmäßiger Verteilung sichergestellt. Durch die flüssige, zähflüssige oder wenigstens klebrige Konsistenz des Hilfsstoffes tritt im schließlich aufgetrockneten Partikel die staubbindende Wirkung dieses Zusatzstoffes in den Vordergrund. Durch geeignete Mengenwahl im eingesetzten Wirkstoffgemisch kann andererseits wiederum sichergestellt werden, daß der angestrebte Zustand der verklebungsfreien Schüttbarkeit beziehungsweise Rieselfähigkeit auch für beliebig lange Lagerungszeiträume aufrechterhalten bleibt. Die im jeweiligen Einzelfall einzustellenden Mischungsverhältnisse werden durch einfache Versuche unter Berücksichtigung des hier betroffenen Fachwissens aufgefunden.

Beispielhaft seien im nachfolgenden charakteristische Vertreter für solche staubbindenden Hilfs- beziehungsweise Wertstoffe zur Abmischung mit den Aniontensidkomponenten aufgezählt:

Geeignete wasserlösliche und unter Normalbedingungen fließfähige Komponenten sind polyfunktionelle schwerflüchtige Alkohole beziehungsweise deren Oligomere, wobei hier schon aus Kostengründen dem Glycerin beziehungsweise entsprechenden Oligoglycerinen besondere Bedeutung zukommen kann. Weitere Beispiele für entsprechende fließfähige und/oder wenigstens unter Einwirkung von Restwasser hinreichende Klebrigkeit verleihende Verbindungen sind Mischungskomponenten wie Oligomere und/oder Polymere von Ethylenglykol und/oder Propylenglykol. Insbesondere Polyethylenglykole - beispielsweise eines Molgewichtsbereiches bis etwa 10.000, vorzugsweise bis etwa 7.000, insbesondere aber auch entsprechende Oligo-Verbindungen mit oberen Molgewichtsgrenzen von etwa 500 bis 1.000 können Wertstoffe im Sinne des erfindungsgemäßen Handelns sein, die - ebenso wie die zuvor erwähnten Vertreter Glycerin und/oder Oligoglycerine - nicht nur die gewünschte Staubbindung bewirken, sondern darüber hinaus Löslichkeitsvermittler und/oder Wertstoff im Rahmen der Wasch- und Reinigungsmittel sind. Typische Vertreter für geeignete Hilfsstoffe sind aber auch Mono- und/oder Oligoglycoside, wobei als Vertreter beispielhaft genannt seien, Glukose, Oligoglukosen, Zucker wie Succrose, Saccharose oder entsprechende höhere Ringzahlen umfassende Zucker, beziehungsweise Zuckerverbindungen, bis hin zu entsprechenden Polymerverbindungen von der Art der Stärke und/oder partiell abgebauter Stärke und Stärkederivate. Alle Verbindungen dieser Art zeichnen sich bekanntlich insbesondere in Gegenwart geringer Wassermengen durch eine mehr oder weniger stark ausgeprägte Klebrigkeit aus, im praktischen Einsatz der Wasch- und Reinigungsmittel werden diese in geringen Konzentrationen vorliegenden Komponenten unmittelbar von den wäßrigen Waschflotten aufgenommen und stören die angestrebten Wasch- beziehungsweise Reinigungsprozesse nicht.

In diesem Zusammenhang sei auf eine weiterführende Möglichkeit der hier besprochenen Ausgestaltung der Aniontensidcompounds verwiesen: Heute finden ausgewählte Glycosidderivate als waschaktive Verbindungen zunehmende Bedeutung, die sich insbesondere als naturstoffbasierte Wertstoffe dieser Art auszeichnen. Angesprochen sind die Klassen der Alkylpolyglycosidverbindungen (APG) sowie der Ester beziehungsweise Partialester von Glycosiden, Zuckern und dergleichen mit bevorzugt längerkettigen Fettsäuren. Glycosidverbindungen der hier betroffenen Art kommt ausgesprochener Niotensidcharakter zu. Sie zeichnen sich darüber hinaus durch ausgeprägte leistungssteigernde Synergismen in Abmischung mit Aniontensiden aus. Glycosidverbindungen der hier betroffenen Art sind als Feststoffe in der Regel trotz ihrer Substitution mit wasch- beziehungsweise reinigungsaktiven Kohlenwasserstoffresten von beispielsweise C₈₋₂₀, insbesondere C₁₀₋₁₈ so hinreichend hygroskopisch, daß sie beim homogenen Einmischen in die aniontensidischen Wertstoffe und bei der Auftrocknung entsprechender wäßriger Slurries zusätzlich die Funktion der zuverlässigen Bindung von pulverförmigen Bestandteilen übernehmen können. Die sich daraus ableitende Vielgestaltigkeit in der Steigerung der Wertigkeit eines entsprechenden Aniontensid/Niotensid-Gemisches bedarf keiner weiteren Erläuterung.

Geeignete Mischungskomponeten für die zuverlässige Beseitigung des Staubproblems sind aber auch oligomere und/oder polymere Mischungskomponeten, die ihrerseits bevorzugt wenigstens wasserquellbar und/oder auch wasserlöslich sind. Auch hier kommt eine Vielzahl von Vertretern in Betracht, denen im Rahmen üblicher Wasch- und Reinigungsmittel wichtige Bedeutung zukommen kann. Als Beispiele seien benannt: Polyvinylpyrrolidon (PVP), Polyvinylalkohol (PVA), Polycarboxylatverbindungen, insbesondere synthetischen Ursprungs, die beispielsweise durch Polymerisation beziehungsweise Copolymerisation von (Meth)acrylsäure und Maleinsäure beziehungsweise Maleinsäureanhydrid erhalten werden können und als sogenannte Builder-Komponenten in heute ublichen Textilwaschmitteln eine beträchtliche Rolle spielen. Ein anderes wichtiges Beispiel für die Verbindungsklasse der zuletzt genannten Art sind Carboxylgruppen enthaltende Oligobeziehungsweise Polyglycosen, wie sie durch gezielte Oxydation von Stärke unter Einführung der Carboxylgruppe in 6-Stellung am Glukosering erhältlich sind. Geeignet sind weiterhin entsprechende wasserlösliche und/oder wasserquellbare Cellulosederivate, wie Methylcellulose, Carboxymethylcellulose, Hydroxyalkylcellulosen, wie Hydroxyethylcellulose und dergleichen.

Diese bisher lediglich beispielhaft aufgezählten Vertreter können durch beliebige andere Mischungskomponenten mit den angegebenen Stoffeigenschaften - insbesondere hinreichende Wasserlöslichkeit beziehungsweise Wasserquellbarkeit, sowie hinreichende Nichtflüchtigkeit unter den Aufarbeitungsbedingungen im überhitzten Wasserdampfstrom - ergänzt und/oder ersetzt werden. Auch hier gilt das einschlägige allgemeine Fachwissen.

Auf eine bestimmte weitere Klasse von Hilfsstoffen sei in diesem Zusammenhang getrennt eingegangen: Als Mischungskomponenten können insbesondere auch unter Normaltemperaturbedingungen fließfähige beziehungsweise hinreichend klebrige niotensidische Komponenten in Betracht kommen, die den zuvor bereits geschilderten Niotensiden auf Basis der Glycosidether beziehungsweise -ester nicht zuzuordnen sind. Lediglich beispielhaft sei auf die Klasse der Fettalkoholethoxylate mit beispielsweise 2 bis 40 EO-Einheiten, insbesondere 2 bis 20 EO-Einheiten im Molekül beziehungsweise auf entsprechende Ethoxylate von Fettsäuren, Fettaminen, Carbonsäureamide und/oder Alkansulfonamiden verwiesen. Die spezielle Lehre der eingangs genannten DE40 30 688 der Anmelderin benennt im Zusammenhang mit dem dort offenbarten Trocknungsverfahren unter der Einwirkung von überhitztem Wasserdampf zahlreiche wichtige Unterklassen und spezielle Typen als Beispiele für solche niotensidischen Komponenten. Die Lehre der vorliegenden Erfindung geht unter anderem über die Offenbarung der älteren Anmeldung insoweit hinaus, als es erfindungsgemäß jetzt darauf abgestellt wird, geeignete niotensidischen Komponenten mit hinreichender Fließfähigkeit beziehungsweise Klebrigkeit in Gegenwart von Restwasser zur sicheren Bindung von unerwünschten Staubanteilen im Fertigprodukt einzusetzen, gleichzeitig aber die bisher im Feinstpulvertrockenzustand nur als äußerst staubende Wirkstoffzubereitungen zugänglichen Aniontenside in hohen Feststoffkonzentrationen zur Verfügung stellen zu können.

Als Aniontensidverbindungen eignen sich wasch- und/oder reinigungsaktive Vertreter dieser Stoffklasse in breitem Umfange, wie sie der Fachwelt heute zur Verfügung stehen. Naturstoffbasierte Materialien sind wie bereits angegeben ebenso geeignet wie entsprechende Folgeprodukte der synthetischen Chemie. Bevorzugte Aniontenside zeichnen sich durch erhöhte ökologische Verträglichkeit aus und sind insbesondere zum anteilsweisen und/oder vollständigen Austausch des aniontensidischen Wirkstoffes auf ABS-Basis geeignet.

Besonders wichtige Aniontensidverbindungen für die Lehre der Erfindung sind Fettalkoholsulfate (gesättigt und/oder ungesättigt), Fettalkoholethersulfate, Olefin- und/oder Alkansulfonate, Fettsäureestersulfonate, sulfierte Fettsäuretriglyceride und/oder Glycerinfettsäure-Partialester-Sulfate. Ein anderes wichtiges Beispiel für Aniontenside im Sinne des erfindungsgemäßen Handelns sind Bernsteinsäurehalbestersulfonate, die in ihrer Estergruppierung einen hinreichend oleophilen Rest - beispielsweise einen Fettalkoholrest mit 6 bis 20 C-Atomen, insbesondere 10 bis 16 C-Atomen - aufweisen. Besonders wichtige Vertreter der Fettsäureestersulfonate sind die bekannten Aniontenside auf Basis von alpha-Sulfofettsäureniedrigalkyl-estern beziehungsweise ihre Salze, wobei hier wiederum die wichtigsten Vertreter die alpha-Sulfofettsäuremethylester (MES) sind. Charakteristische Vertreter für Fettsäuresulfonate sind alpha-Sulfofettsäuren beziehungsweise ihre wasch- beziehungsweise reinigungsaktiven Salze, die in der Fachwelt als "Di-Salze" bekannt sind und aus freien Fettsäuren und/oder aus entsprechenden alpha-Sulfofettsäureestern durch Esterspaltung zugänglich sind. Sulfierte Fettsäuretriglyceride sind bekanntlich Umsetzungsprodukte natürlicher Fette und/oder Öle mit insbesondere SO₃, die als mehrkomponentige Wirkstoffmischungen aus Sulfaten und Sulfonaten anfallen und beispielsweise beschrieben sind in den Schutzrechtsanmeldungen der Anmelderin DE-A 39 36 001 und 39 41 365.

Die wasch- und/oder reinigungsaktiven Aniontenside liegen üblicherweise in Form ihrer Alkali- und/oder Ammoniumsalze beziehungsweise als lösliche Salze organischer Basen vor. Besonders wichtige Alkalisalze sind bekanntlich die Natriumsalze und die entsprechenden Kaliumsalze. Gegebenenfalls mitverwendete Hilfsstoffe liegen üblicherweise in Mengen von wenigstens 2 bis 3 Gew.-%, vorzugsweise in Mengen von wenigstens 5 bis 10 Gew.-% - Gew.-% bezogen jeweils auf Mehrkomponentengemisch - vor.

Die Lehre der Erfindung umfaßt die Abmischung der Aniontensidverbindungen und ihre Abmischungen mit den bisher aufgezählten Mischungskomponenten insbesondere organischer Natur, auch in Abmischung mit anorganischen Mischungsbestandteilen. Hierbei kann es sich bevorzugt um entsprechende Komponenten aus dem Bereich üblicher Bestandteile von Wasch- und/oder Reinigungsmitteln handeln, die zweckmäßigerweise ebenfalls homogen in die Pulver und/oder Granulate eingearbeitet sind. Als Beispiele für solche wasserlöslichen anorganischen Mischungskomponenten seien wasserlösliche Salze wie Natriumcarbonat, Natriumbicarbonat und/oder Natriumsulfat aber auch wasserlösliche Natriumsilikate, insbesondere die für Wasch- und Reinigungsmittel typischen Wassergläser benannt. Neben oder anstelle solcher wasserlöslicher anorganischer Komponenten können wasserunlösliche Mischungskomponenten in die pulverförmigen Aniontensidagglomerate eingearbeitet sein. Als Beispiel seien hier benannt: Synthetische Zeolithverbindungen insbesondere Zeolith-NaA in Waschmittelqualität und einem Calciumbindevermögen im Bereich von 100 bis 200 mg Ca0/g - vergleiche hierzu die Angaben der DE 24 12 837. Die Besonderheit für erfindungsgemäß ausgestaltete Aniontensidkonzentrate wird gerade aus der Mitverwendung solcher unlöslicher anorganischer Bestandteile ersichtlich: Wird beispielsweise Talgalkoholsulfat (TAS) zusammen mit Zeolith-NaA einem konventionellen Sprühtrocknungsverfahren unterworfen, so zieht die waschaktive TAS-Komponente in derart fest geschlossener dünner Schicht auf die Zeolithteilchen auf, daß im nachfolgenden Einsatz substantielie Anteile der Waschkraft sich nicht mehr in der wäßrigen Flotte ausbilden können. In den erfindungsgemäß definierten und im Rahmen der erfindungsgemäßen Lehre hergestellten Aniontensidkonzentraten ist diese Negativwirkung beim Zeolithzusatz nicht oder zumindestens in einem sehr stark verminderten Ausmaß gegeben. Weitere Beispiele für wasserunlösliche mögliche Mischkomponenten sind feinteilige quellfähige Schichtsilikate von der Art entsprechender Montmorillonite, beispielsweise Bentonit. Grundsätzlich gilt natürlich auch für die im Rahmen der vorliegenden Erfindung einzusetzenden Wertund Hilfsstoffe die in der bereits mehrfach genannten DE-A 40 30 688 angegebene allgemeine Regel, gemäß der solche Wertstoffe beziehungsweise Wertstoffkombinationen und Hilfsstoffe geeignet sind, die durch kurzfristige Einwirkung von Wasser beziehungsweise Wasserdampf im Temperaturbereich von 100 bis 110°C nicht oder nicht wesentlich geschädigt werden. Geeignet sind insbesondere als Wertstoffbestandteile Komponenten dieser Art, die unter den Arbeitsbedingungen den angegebenen Temperaturbereich wenigstens für einen Zeitraum von etwa 0,5 bis 1 min. schadlos überstehen. Insbesondere können damit auch beispielsweise an sich hydrolysegefährdete Tensidverbindungen unter diesen Arbeitsbedingungen Verweilzeiträume von einigen Minuten weitgehend unbeschadet überstehen, wenn bestimte, dem einschlägigen Fachmann bekannte Rahmenbedingungen eingehalten werden. So wird es möglich, im erfindungsgemäßen Verfahren wäßrige Zubereitungen von an sich hydrolysegefährdeten Aniontensiden wie FAS und/oder MES zu staubfreien Trockenpulvern aufzuarbeiten.

Die eingangs bereits erwähnte besonders wichtige Ausführungsform der Erfindung, in der die Aniontensidkonzentrate als schütt- und rieselfähiges Gut mit einer saugfähig porösen Innenstruktur ausgebildet sind, greift auf die in der deutschen Patentanmeldung P 42 34 376.3 der Anmelderin geschilderten Prinzipien zurück. Der Offenbarungsinhalt auch dieser deutschen Patentanmeldung wird hiermit ausdrücklich zum Gegenstand der vorliegenden Erfindungsoffenbarung gemacht. In den Rahmen der erfindungsgemäß beschriebenen und beanspruchten Aniontensidkonzentrate fallen damit insbesondere auch entsprechende Wirkstoffzubereitungen, die als poröses Trägerbead für die Herstellung von festen Netz-, Wasch- und/oder Reinigungsmitteln ausgebildet sind und sich dadurch kennzeichnen, daß sie eine saugfähig poröse Innenstruktur aufweisen, dabei zu wenigstens etwa 35 Gew.-% Gew.-% bezogen auf poröses Trägerbead - aus Aniontensiden bestehen und durch Sprüh- und/oder Wirbelschichttrocknung in überhitztem Wasserdampf hergestellt worden sind.

Die Aniontenside in hoher Konzentration enthaltenden porösen Trägerbeads eignen sich für die unmittelbare Verwendung in Netz-, Wasch- und/oder Reinigungsmitteln, oder aber auch zunächst für eine Beladung des Grundkorns mit Wertstoffen aus dem angesprochenen Sachgebiet, beispielsweise also weiteren tensidischen Komponenten. Einzelheiten hierzu sind Gegenstand der Offenbarung der zuvor genannten deutschen Patentanmeldung P 42 34 376.3 der Anmelderin.
Für die vorliegende Erfindung liegt eine besonders wichtige Ausgestaltung der erfindungsgemäßen Trägerbeads mit mikroporöser Innenstruktur in entsprechenden Ausführungsformen mit Aniontensidgehalten des unbeladenen Trägerbeads von wenigstens etwa 50 Gew.-%, wobei der Aniontensidgehalt dabei bis zu 70, 80 oder auch bis zu 90 bis 95 Gew.-% des Trägerbeads betragen kann. Es werden im nachfolgenden noch Sonderfälle geschildert werden, in denen durch Auswahl des richtigen Aniontensids das Trägerbead praktisch vollständig aus der tensidischen Komponente gebildet sein kann.

Dabei gilt erfindungsgemäß weiterhin die bevorzugte Regel, daß das getrocknete Trägerbead im Temperaturbereich von etwa 100 bis 110°C und bevorzugt im Temperaturbereich bis etwa 120°C als Feststoff vorliegt, dessen Plastizität und Oberflächenklebrigkeit durch geeignete Auswahl und Zusammenstellung der das Trägerbead bildenden Komponenten derart eingeschränkt sind, daß substantielle Verklebungen der Teilchen miteinander und/oder substantielle Verklebungen deren offenporigen Innenstruktur auch unter den Bedingungen der Einwirkung des überhitzten Wasserdampfes ausscheiden. Die erfindungsgemäße Lehre stellt damit sicher, daß das spezielle hochporöse Strukturgerüst des primär bei der Trocknung mit überhitztem Wasserdampf anfallenden Trocknungsgutes derart fixiert ist, daß es in den unausweichlichen mechanischen Druck- und Berührungsbelastungen für ein solches kornförmiges Gut auch im Bereich erhöhter Temperaturen und gegebenenfalls in Gegenwart von Heißdampf aufrechterhalten bleibt.

Je höher der Gehalt des Trägerbeads an tensidischer Komponente wird, um so stärker treten die individuellen Eigenschaften des eingesetzten Tensids im Verhalten des porösen Trägerbeads in den Vordergrund. Für die erfindungsgemäße Lehre bedeutet das, daß im Temperaturbereich von etwa 100 bis 120°C hinreichend feste Tensidkomponenten bevorzugte Materalien sind. Diese Aniontensidkonzentrate enthalten in erfindungsgemäß bevorzugten Ausführungsformen Abmischungen mit wasserlöslichen und/oder feinteiligen wasserunlöslichen anorganischen und/oder organischen Hilfs- und/oder Wertstoffen, deren Auswahl so getroffen wird, daß die erfindungsgemäß wesentlichen Einschränkungen der Plastizität und/oder der Oberflächenklebrigkeit im Temperaturbereich um 100 bis 120°C gewährleistet sind. Dabei liegen in den bevorzugten Ausführungsformen der Erfindung solche Mischungskomponenten, bezogen auf die Aniontenside im Trägerbead, in untergeordneten Mengen vor. Erfindungsgemäß gelingt damit erstmalig der Zugang zu festen trockenen Wertstoffzubereitungen des Gebietes der Netz-, Wasch- und Reinigungsmittel, in denen ein festes Trägerbead zum wenigstens überwiegenden Bestandteil auf Aniontensidbasis aufgebaut ist. Die bisherige Waschmitteltechnologie kennt solche Stoffzubereitungen nicht.

Das Temperaturverhalten der das Trägerbead bildenden Komponenten und insbesondere der in der erfindungsgemäß bevorzugten Ausführungsform hier eingesetzten tensidischen Komponenten im Temperaturbereich von etwa 100 bis 120°C hat bestimmenden Einfluß auf die jeweils zu wählende Zusammensetzung der Wert- und Hilfsstoffe für den Trägerbead-Aufbau. Wichtige Aniontenside, beispielsweise Fettalkoholsulfate (FAS) langkettiger Fettalkohole, eine Vielzahl waschaktiver Sulfonate, aber auch niotensidische Verbindungen, beispielsweise Alkylglycosidverbindungen langkettiger Fettalkohole, sind im angesprochenen Temperaturbereich zwar noch in der Feststoffphase beständig, ihre Plastizität und insbesondere Oberflächenklebrigkeit kann aber schon vergleichsweise stark zugenommen haben. Die Erfindung sieht für Einsatzmaterialien dieser Art vor, die thermisch nicht voll befriedigenden Bestandteile für das Trägerbead dadurch vollwertig einsetzbar zu machen, daß Mischungskomponenten mitverwendet werden, die die geforderte Temperaturstabilität und insbesondere die geforderten niedrigen Werte in Oberflächenklebrigkeit und Plastizität sicherstellen. Bei diesen Mischungskomponenten kann es sich um Wertstoffe im Sinne von heute üblichen Wasch- und Reinigungsmittelgemischen handeln, es können aber auch Hilfsstoffe mitverwendet werden, die im beabsichtigten Anwendungsgebiet keine Eigenfunktion entwickeln, die Verwendung der erfindungsgemäß zubereiteten Wertstoffe beziehungsweise Wertstoffkombinationen aber nicht stören. Solche Hilfsstoffe können wasserlöslich und/oder wasserunlöslich sein. Sie können dabei anorganischer und/oder organischer Natur sein. Im Falle der wasserunlöslichen Verbindungen werden üblicherweise feinteilige anorganische und/oder organische Hilfsstoffe mitverwendet. Lediglich beispielhaft sind die nachfolgenden Angaben zu verstehen:

### Anorganische/organische Hilfsstoffe

Geeignete wasserlösliche anorganische Hilfsstoffe zur Herabsetzung der Oberflächenklebrigkeit und Plastizität organischer Komponenten sind Salze wie Phosphate, insbesondere STP, Natriumsulfat oder Natriumcarbonat. Aber auch löslichen Natriumsilicaten von der Art der Wassergläser und/oder Alkalihydroxid kann entsprechende Funktion zukommen. Unlösliche anorganische Mischungskomponenten zur Stabilisierung der Trägerbead-Konsistenz und Absenkung der Oberflächenklebrigkeit sind beispielsweise Builder-Komponenten auf Zeolith- Basis, insbesondere Zeolith-NaA in Waschmittelqualität, andere quellfähige oder nicht-quellfähige Schichtsilikate, beispielsweise entsprechende Montmorillonite wie Bentonit und dergleichen. Aber auch andere Builderkomponenten auf Basis fester, insbesondere kristalliner Silicat-Verbindungen, die in der heutigen Waschmitteltechnologie bekannt sind, kommen hier in Betracht.

Entsprechende Hilfsmittel finden sich auf der Seite organischer Komponenten. So sind beispielsweise Salze niedermolekularer organischer Komponenten im hinreichend aufgetrockneten Zustand in der Regel auch bei erhöhten Temperaturen nicht-klebrige Komponenten. In Betracht kommen hier entsprechende organische Gerüstsubstanzen wie die Alkalisalze von Polycarbonsäuren beispielsweise Citronensäure, Adipinsäure, Bernsteinsäure, Nitrilotriessigsäure und dergleichen. Als Hilfsstoff zur Stabilisierung des Trägerbeads auch im hohen Temperaturbereich kommen aber auch organische Polymersubstanzen in Betracht wie sie in Wasch- und Reinigungsmitteln üblich sind, beispielsweise entsprechende Komponenten auf Basis von Cellulosederivaten und/oder PVP, oder aber auch inerte organische Polymermaterialien wie Cellulosepulver und dergleichen.

Grundsätzlich gilt, daß geeignete Stoffgemische und Mischungsverhältnisse mittels einer dem Fachmann geläufigen Arbeitsmethodik im Rahmen von Vorversuchen ermittelt werden können. Nach Durchführung entsprechender Vorversuche können dann die ausgewählten Stoffgemische der Sprühtrocknung aus wäßrigen Aufbereitungen in überhitztem Wasserdampf unterworfen werden. Das dabei anfallende kornförmige Trockengut zeigt in der nachfolgenden Behandlung mit einer fließfähigen Phase, ob und in welchem Ausmaß die erwünschte feinporöse Struktur und damit Beladbarkeit des gebildeten Trägerbeads auch in seiner Innenstruktur ausgebildet sind.

Wesentlich ist für das Verständnis der erfindungsgemäßen Lehre, daß übliche Aniontenside synthetischen und/oder natürlichen Ursprungs, wie sie in der Praxis der heutigen Netz-, Wasch- und Reinigungsmittel bekannt sind, durch Mitverwendung in der Regel beschränkter Mengen an Hilfsmitteln in den Zustand hinreichend temperaturstabiler und nicht-klebriger Feststoffe umgewandelt und damit zum porösen Trägerbead mit aufgeschlossener Innenstruktur aufgearbeitet werden können. Auf diesem Wege erschließt sich damit erstmalig die Möglichkeit, poröse Trägerbeads für die Aufnahme von weiteren Waschmittelbestandteilen zu schaffen, die zum überwiegenden Anteil aus Aniontensiden gebildet sind.

In Sonderfällen ist hier sogar die Möglichkeit gegeben, praktisch ohne Mitverwendung von Hilfsstoffen die porösen Trägerbeads aus dem Aniontensid aufzubauen. Ein solcher Fall ist bei den sogenannten Di-Salzen gegeben, die bekanntlich Salze, vorzugsweise die Alkalisalze von waschaktiven alpha-sulfonierten Sulfofettsäuren darstellen. Di-Salze beziehungsweise Di-Salzgemische technischer Reinheit können nicht nur ohne Zusatz von weiteren Hilfskomponenten zum porösen Trägerbead aufgearbeitet werden, sie können ihrerseits Hilfsstoffe für thermisch weniger stabile Aniontensidkomponenten wie FAS, FAES, MES, ABS und dergleichen sein.

In einer bevorzugten Ausführungsform der Erfindung wird das poröse Trägerbead in seiner Grundstruktur unter Mitverwendung von Aniontensiden aus den Klassen der Carboxylate, der Sulfonate einschließlich der Estersulfonate, der Di-Salze und/ oder der Sulfate ausgebildet. Besonders wichtige Aniontensidkomponenten für den Aufbau des Trägerbeads sind Alkylbenzolsulfonate (ABS), Fettalkoholsulfate (FAS), Fettalkoholethersulfate (FAES), alpha-Methylestersulfonate (MES) und/oder Di-Salze. Die Trägerbeads können dabei ausgewählte Aniontenside oder Gemische mehrerer Aniontenside enthalten, die in der Regel in Abmischung mit wasserlöslichen und/oder feinteiligen wasserunlöslichen anorganischen und/ oder organischen Hilfs- und/oder Wertstoffen ohne Tensidcharakter aufgebaut sind. In der hier betroffenen Ausführungsform der Erfindung ist weiterhin bevorzugt, den Gehalt solcher Trägerbeads an anorganischen und/oder organischen Hilfsstoffen in Mengen nicht über etwa 60 Gew.-% und vorzugsweise im Bereich von etwa 5 bis 50 Gew.-% zu wählen, wobei wiederum Mengen dieser Hilfsstoffe zur hinreichenden Stabilisierung der Aniontenside auch im Temperaturbereich von etwa 100 bis 120°C in Mengen von etwa 10 bis 30 Gew.-% besonders bevorzugt sind. Alle diese Gew.-%-Angaben beziehen sich dabei auf das unbeladene getrocknete Trägerbead.

Wichtige Ausführungsformen der Erfindung sehen hier vor, daß die Trägerbeads in ihrer Korngrundstruktur die Aniontenside in Abmischung mit hinreichend temperaturstabilen sonstigen Wertstoffen des Bereichs der Netz-, Wasch- und/oder Reinigungsmittel enthalten. In Betracht kommen in einer wichtigen weiteren Ausführungsform als Zusatzstoffe insbesondere aber auch solche Komponenten, die zu einer Verbesserung der Aniontensidauflösung in wäßrigen Phasen befähigt sind. Beispiele hierfür sind übliche Dispergatoren, Hydrotrope, Strukturbrecher und dergleichen.

Die Lehre der Erfindung umfaßt ausdrücklich auch die in der geschilderten Weise bestimmt ausgestalteten porösen und nicht beladenen Trägerbeads mit einem Gehalt an Wert- und gegebenenfalls Hilfsstoffen des angegebenen Anwendungsgebietes bei gleichzeitig verbesserter Wasserlöslichkeit. Zur Erhöhung der raschen Auflösung an sich schwerlöslicher Komponenten, zum Beispiel entsprechender Aniontenside wie FAS, auch bei Raumtemperatur oder nur mäßig erhöhten Temperaturen kann die Mitverwendung sogenannter Strukturbrecher wichtig sein, die häufig schon in sehr geringen Mengen -bezogen auf Aniontensid - hochwirksam sind.

Im nachfolgenden sind eine Reihe solcher Dispergatoren bzw. Strukturbrecher in den Untergruppen (a) bis (g) zusammenfassend dargestellt. Darüber hinaus wird auf das allgemeine Fachwissen des hier angesprochenen Tensid-Fachmannes verwiesen.
(a) Als Strukturbrecher eignen sich eine Reihe sowohl fester als auch flüssiger Substanzen, die hydrophil, wasserlöslich oder in Wasser dispergierbar sind. Geeignet sind beispielsweise niedere Polyalkylenglykole, die sich von geradkettigen oder verzweigtkettigen Glykolen mit 2 bis 6 Kohlenstoffatomen ableiten, vorzugsweise Polyethylenglycol oder Polypropylenglycol, und eine relative Molekülmasse zwischen 200 und 12.000 aufweisen. Insbesondere sind Polyethylenglycole mit einer relativen Molekülmasse zwischen 200 und 4.000 bevorzugt, wobei die flüssigen Polyethylenglycole mit einer relativen Molekülmasse bis 2.000 und insbesondere zwischen 200 und 600 besonders vorteilhafte Eigenschaften aufweisen.
(b) Ebenso sind die Sulfate und insbesondere die Disulfate von niederen Polyalkylenglycolen und zwar insbesondere des Polyethylenglycols und des 1,2-Propylenglycols geeignet. Besonders bevorzugt sind dabei die Sulfate und/ oder Disulfate, die sich von Polyethylenglycolen und Polypropylenglycolen mit einer relativen Molekülmasse zwischen 600 und 6.000 und insbesondere zwischen 1.000 und 4.000 ableiten. Die Disulfate stammen dabei in der Regel von Polyglycolethern, wie sie-bewirkt durch geringe Wasserspuren - bei der Oxalkylierung von alkoholischen Komponenten entstehen können, ab.
(c) Eine weitere Gruppe der geeigneten Strukturbrecher besteht aus den wasserlöslichen Salzen von Mono- und/oder Disulfosuccinaten der niederen Polyalkylenglycole. Besondere Bedeutung besitzen dabei wiederum die entsprechenden Polyethylenglycol- und Polypropylenglycol-Verbindungen, wobei Sulfosuccinate und Disulfosuccinate von Polyglycolethern mit einer relativen Molekülmasse zwischen 600 und 6.000, insbesondere zwischen 1.000 und 4.000, besonders bevorzugt sind.
   Für die Verwendung der anionisch modifizierten Polyalkylenglycole als Strukturbrecher kommen beliebige Salze, vorzugsweise jedoch die Alkalimetallsalze, insbesondere die Natrium- und Kalium-Salze, sowie Ammoniumsalze und/ oder Salze von organischen Aminen, beispielsweise von Triethanolamin, in Betracht. Die für die praktische Anwendung wichtigsten Salze sind die Natriumsalze der Sulfate, Disulfate, Sulfosuccinate und Disulfosuccinate von Polyethylenglycol und Polypropylenglycol.
   Vorzugsweise werden auch Mischungen der Polyalkylenglycole und ihrer anionisch modifizierten Derivate in einem beliebigen Mischungsverhältnis eingesetzt. Insbesondere ist dabei eine Mischung aus Polyalkylenglycol und den Sulfosuccinaten und/oder Disulfosuccinaten der Polyalkylenglycole bevorzugt. Geeignet ist aber auch eine Mischung aus Polyalkylenglycol und den entsprechenden Sulfaten und/oder Disulfaten und eine Mischung aus Polyalkylenglycol und den entsprechenden Sulfaten und/oder Disulfaten sowie den entsprechenden Sulfosuccinaten und/ oder Sulfodisuccinaten.
(d) Weiterhin sind im Sinne dieser Erfindung geeignete und bevorzugt eingesetzte Strukturbrecher die Anlagerungsprodukte von etwa 20 bis etwa 80 Mol Ethylenoxid an 1 Mol eines aliphatischen Alkohols mit im wesentlichen 8 bis 20 Kohlenstoffatomen,die seit langem bekannte Inhaltsstoffe von Wasch- und Reinigungsmitteln darstellen. Besonders wichtig sind die Anlagerungsprodukte von 20 bis 60 Mol und insbesondere 25 bis 45 Mol Ethylenoxid an primäre Alkohole, wie zum Beispiel Kokosfettalkohol oder Talgfettalkohol, an Oleylalkohol, an Oxoalkohole, oder an sekundäre Alkohole mit 8 bis 18 und vorzugsweise 12 bis 18 Kohlenstoffatomen. Beispiele für besonders bevorzugte Strukturbrecher aus der Gruppe der hochethoxylierten Alkohole sind Talgfettalkohol mit 30 EO und Talgfettalkohol mit 40 EO. Ebenso ist es bevorzugt, Mischungen einzusetzen, die hochethoxylierte Alkohole enthalten, beispielsweise Mischungen aus Talgfettalkohol mit 40 EO und Wasser oder aus Talgfettalkohol mit 40 EO und Polyethylenglykol mit einer relativen Molekülmasse zwischen 200 und 2.000.
(e) Weitere geeignete Strukturbrecher sind ethoxylierte, vicinale innenständige Alkandiole oder 1,2-Alkandiole mit einer Kohlenstoffkette mit 8 bis 18 Kohlenstoffatomen und 4 bis 15 Mol Ethylenoxid pro Mol Diol. Dabei ist es möglich, daß nur eine der beiden OH-Gruppen oder beide OH-Gruppen des Alkandiols ethoxyliert sind.
(f) Weiterhin sind als Strukturbrecher modifizierte nichtionische Tenside mit einer endständigen Säuregruppe geeignet. Hierbei handelt es sich um nichtionische Tenside, insbesondere um Fettalkohole, bei denen eine OH- Gruppe in eine Gruppe mit einer Carboxylgruppe umgewandelt wurde. Zu den nichtionischen Tensiden mit endständiger Säuregruppe gehören somit Ester oder Teilester eines nichtionischen Tensids mit einer Polycarbonsäure oder einem Polycarbonsäureanhydrid. Beispiele für säure- terminierte nichtionische Tenside sind die bekannten Polyethercarbonsäuren und Ester beziehungsweise Halbester von C₈₋₁₈-Alkoholen mit Bernsteinsäureanhydrid, Maleinsäureanhydrid, Maleinsäure oder Citronensäure.
(g) Eine weitere Gruppe geeigneter Strukturbrecher besteht aus Alkylenglykol-monoalkylethern der allgemeinen Formel,

   R⁴O(CH₂CH₂O)ₙH

   in der R⁴ einen Rest mit 2 bis 6 Kohlenstoffatomen und n eine Zahl von 1 bis 8 darstellen. Beispiele für diese Gruppe der Zusatzstoffe sind Ethylenglykolmonoethylether und Diethylenglykolmonobutylether.

Zu den möglichen Ausführungsformen des Heißdampf-Trocknungsverfahrens wird auf die genannten älteren Anmeldungen und insbesondere auf die Angaben der deutschen Patentanmeldungen DE-A 42 04 035 und DE-A 42 04 090 verwiesen. Zur Vervollständigung der Erfindungsoffenbarung auch im Rahmen der vorliegenden Anmeldung sei hier lediglich auf eine Auswahl besonders wichtiger Verfahrensparameter eingegangen:

Die Arbeitsbedingungen des erfindungsgemäßen Verfahrens ermöglichen den Einsatz hoher Temperaturen der im Kreislauf geführten Wasserdampfphase im Bereich des Trocknungsschrittes der Sprühtrocknung. In der Regel liegen die Arbeitstemperaturen des Einsatz-Dampfes oberhalb 150°C und vorzugsweise bei wenigstens etwa 200°C in der Gasphase. Dabei können Arbeitstemperaturen von 250°C und darüber besonders interessant sein, wobei insbesondere auch der Temperaturbereich von wenigstens 300°C, insbesondere 300 - 380°C in Betracht kommt. Für viele Fälle sind Arbeitstemperaturen im Bereich von etwa 270 - 350°C in der Wasserdampfphase besonders geeignet. Dabei beziehen sich alle diese Temperaturangaben jeweils auf die Temperatur des der Sprühzone im Gleich- oder Gegenstrom zugeführten auf Optimal-Temperatur aufgeheizten Wasserdampfstromes. In an sich bekannter Weise sinkt im Verlaufe des Verweilens mit dem nassen beziehungsweise feuchten Gut die Temperatur des Wasserdampfes. Weitgehend energetische Überlegungen - insbesondere auch zu der beabsichtigten Weiterverwendung des auszukreisenden Dampfteilstromes - bestimmen die Mengenverhältnisse zwischen der zu verdampfenden flüssigen Wassermenge und der zugeführten Menge des überhitzten Wasserdampfes. Möglich sind hier Ausführungsformen, die nur eine beschränkte Absenkung der Dampftemperatur nach Verlassen der Sprühzone beispielsweise auf Werte im Bereich von etwa 190 - 250°C beinhalten, während in anderen Ausführungsformen eine weiterführende Ausnutzung der thermischen Energie des Wasserdampfes bis zu einer Absenkung der Dampftemperatur in die Nähe der Kondensationstemperatur unter Verfahrensbedingungen - 100 bis 110°C - zweckmäßig beziehungsweise vorteilhaft sein kann. Im einzelnen werden diese Detailfragen durch die Ausgestaltung des Kreislaufverfahrens in seiner Gesamtheit mitbestimmt. Entsprechende Überlegungen gelten für den Einsatz von überhitztem Wasserdampf als Heißgas in einer gegebenenfalls vorgesehenen Nachbehandlungsstufe zum Beispiel im Wirbelschichtverfahren oder einem anderen, gegebenenfalls integrierten Agglomerationstyp. Auch die zuvor angegebenen Zahlenwerte gelten hier sinngemäß.

Grundsätzlich gilt für diese Überlegungen, daß im geschlossenen System mit einem Wasserdampfkreislaufstrom gearbeitet wird, dem der verdampfte Wasseranteil des Einsatzgutes entzogen wird, während der insbesondere im Trocknungsschritt abgegebene Energiebetrag dem Kreislaufstrom auf direktem oder bevorzugt indirektem Weg wieder zugeführt wird. Der abgezogene Wasserdampfteilstrom wird nach der Reinigung von mitgetragenen Gutanteilen in einer wichtigen Ausführungsform als Brauchdampf anderweitiger Verwendung zugeführt, nachdem gewünschtenfalls zunächst Druck und Temperatur dieses Dampfteilstromes den dort geforderten Bedingungen angeglichen worden sind. In einer anderen Ausführungsform des erfindungsgemäßen Verfahrens kann es zweckmäßig sein, wenigstens einen Anteil dieses abgezogenen Dampfteilstromes zu kondensieren, um damit beispielsweise eine Naßwäsche des abgezogenen Dampfteilstromes und dessen Reinigung von mitgetragenen Gutanteilen zu bewirken. Die dabei anfallende wäßrige Flüssigphase kann zusammen mit den darin vorliegenden ausgekreisten Wertstoffanteilen in das Trocknungsverfahren zurückgeführt werden. In diesem Zusammenhang ist es beispielsweise möglich, dampfförmige Anteile des ausgekreisten Gasstromes zur Aufkonzentrierung einer solchen Waschflüssigphase einzusetzen. Die zurückgeführten Flüssiganteile mit Wertstoffgehalten können unmittelbar der Sprühzone zugeführt oder zunächst mit den wäßrigen Frischzubereitungen vermischt und in dieser Form zur Trocknung in die Sprühzone eingegeben werden.

Eine besonders interessante Ausführungsform der erfindungsgemäßen Lehre sieht die Rückgewinnung und Verwertung der Kondensationswärme des aus dem Kreislauf ausgeschleusten Wasserdampfanteiles vor. Durch den Einsatz geeigneter Arbeitsschritte kann dabei die Recyclisierung auch der geringen Wertstoffanteile sichergestellt werden, die über den ausgeschleusten Heißdampfstrom den primären Kreislauf des Dampfes verlassen haben. Hier kann beispielsweis unter Ausnutzung der Kondensationswärme des ausgeschleusten Dampfanteiles wie folgt gearbeitet werden:

In einer bevorzugt mehrstufigen Eindampfanlage wird unter Ausnutzung der Kondensationswärme des abgezogenen Dampfteilstromes das Dampfkondensat aufkonzentriert. Das dabei anfallende Restkonzentrat wird in den Verfahrensprimärkreislauf zurückgeführt. Insbesondere kann dieses Restkonzentrat dem durch überhitzten Heißdampf zu trocknenden Wertstoffslurry zugegeben werden.

Falls erforderlich, kann bei der Kondensation des aus dem Primärkreislauf ausgeschleusten Heißdampfes eine hier gegebenenfalls anfallende mit geringsten Wertstoffmengen beladene Restgasphase einem nachfolgenden Aufarbeitungsschritt - beispielsweise einer Verbrennung, der Behandlung in Biofiltern oder in Waschanlagen - zugeführt werden. Durch eine solche Kombination der Maßnahmen eines praktisch vollständigen Recyclisieren der jeweiligen Teilströme und der zuverlässigen Vernichtung von letzten Restspuren ermöglicht das erfindungsgemäße Verfahren auf dem hier betroffenen Arbeitsgebiet großtechnischer Fertigung erstmalig die Möglichkeit Wertstoffe und Wertstoffgemische aus dem Gebiet der Wasch- und Reinigungsmittel Abluft-frei und frei von beladenem Abwasser zu gewinnen.

Auch unter den erfindungsgemäßen Arbeitsbedingungen kann die Trocknung mit dem überhitzten Wasserdampf einerseits als Sprühtrocknung und/oder andererseits aber auch als Trocknung in der Wirbelschicht vorgenommen werden. Vergleichsweise hoch wasserhaltige Einsatzmaterialien liegen beispielsweise als fließfähige und versprühbare wäßrige Lösungen, Emulsionen und/oder Suspensionen der aufzutrocknenden Wertstoffe beziehungsweise Wertstoffgemische vor. Einsatzmaterialien dieser Art werden in einer wichtigen Ausführungsform der an sich bekannten Technologie der Sprühtrocknung unterworfen. Die Sprühtrocknung kann in entsprechend ausgerüsteten Sprühtürmen in Gleichstrom- oder in Gegenstromfahrweise vorgenommen werden. Die Anwendung des Gegenstromprinzips ist auch im Rahmen des erfindungsgemäßen Arbeitens mit überhitztem Wasserdampf als Trocknungsheißgas in der Regel bevorzugt.

Beim Arbeiten unter den Bedingungen der Sprühtrocknung wird es erfindungsgemäß bevorzugt, den direkten oder bevorzugt indirekten Energieeintrag zur Zuführung der Verdampfungsenergie in den Dampfkreislauf wenigstens überwiegend außerhalb der Trocknungszone vorzunehmen. Auf diese Weise wird das aus der konventionellen Sprühtrocknung bekannte Ergebnis sichergestellt, das fließfähige nasse Einsatzmaterial in feiner Partikelform ohne nennenswertes Verkleben der Partikel miteinander oder wenigstens unter einer steuerbaren Einstellung der Partikelgröße aufzutrocknen. Der außerhalb der Sprühtrocknungszone am Dampfkreislauf vorgenommene Energieeintrag kann in jeder bekannten beliebigen Form der indirekten Wärmeübertragung vorgenommen werden. Als Beispiel sei die Verwendung von Rohrbündelsystemen erwähnt, die einerseits von Heizgasen beliebigen Ursprungs und andererseits - aber getrennt von diesen Heizgasen - von dem aufzuheizenden Wasserdampfstrom durchströmt werden.

In einer besonders wichtigen Ausführungsform der Erfindung wird dieser indirekte Energieeintrag in den Dampfkreislaufstrom mittels eines oder mehrerer integrierter Brenner mit indirekter Wärmeübertragung auf den Dampfstrom vorgenommen, wobei Brenner-seitig die heißen Verbrennungsgase unmittelbar in den Wärmeaustauscher eingeleitet werden, der in den Dampfkreislaufstrom integriert ist. Die Temperatur der Verbrennungsgase kann dabei beispielsweise im Bereich von etwa 400 bis 1.000°C und insbesondere im Temperaturbereich von etwa 650 bis 960°C liegen. Zur optimalen Wärmeausnutzung und damit zur Kostensenkung des Gesamtverfahrens kann es zweckmäßig sein, eine anteilige, bevorzugt möglichst weitgehende Kreislaufführung auch der Rauchgase vorzusehen. So können beispielsweise wenigstens 30 Vol.-% und vorzugsweise mehr als 40 Vol.-% der heißen Rauchgase nach dem Verlassen des integrierten Wärmeaustauschers im Kreislauf zur weiteren Energieverwertung wieder zurückgeführt werden. Vorzugsweise liegt die Menge der Rauchgaskreislaufführung bei mehr als 60 Vol.-% und dabei häufig im Bereich von etwa 70 Vol.-% der zugeführten Verbrennungsgase. Zum Betrieb des Brenners sind alle üblichen Brenngase, insbesondere Erdgas oder vergleichbare niedere Kohlenwasserstoffe beziehungsweise Kohlenwasserstoffgemische und/oder Wasserstoff geeignet.

Wird andererseits das erfindungsgemäße Trocknungsprinzip im Rahmen einer Wirbelschichttrocknung eingesetzt, so kann hier die erforderliche Aufheizung des Trocknungsgases auf Dampfbasis sowohl außerhalb der Trocknungszone als auch mit Wärmeaustauscherelementen bewirkt werden, die in das Wirbelbett integriert sind. Dabei können auch diese beiden Mechanismen der Gasaufheizung miteinander verbunden werden.

Das erfindungsgemäß bevorzugte Arbeiten im Bereich des Normaldrucks ermöglicht den vergleichsweise komplikationslosen Betrieb auch in großtechnischen Anlagen mit den geforderten hohen Stoffdurchsätzen pro Zeiteinheit. Die erfindungsgemäß bevorzugte Maßnahme des leicht angehobenen Innendrucks verhindert zuverlässig das unerwünschte Einbrechen von Fremdgas, insbesondere von Luft, in das mit Wasserdampf erfüllte Kreislaufsystem. Sekundärschädigungen der angestrebten hochwertigen Produktbeschaffenheit können damit zuverlässig ausgeschlossen werden. Geeignete Arbeitsdrucke liegen beispielsweise im Bereich bis etwa 0,15 bar, zweckmäßig bis etwa 0,075 bar und vorzugsweise unterhalb 0,05 bar. Der Bereich von etwa 0,005 bis 0,015 bar System-Innendruck kann besonders bevorzugt sein. Die Trocknung mit überhitztem Wasserdampf im Sinne der erfindungsgemäßen Lehre ist prinzipiell natürlich auch bei Unterdrucken, insbesondere im Bereich mäßiger Unterdrucke, möglich, erfordert dann aber einen erhöhten technischen Aufwand zur Sicherstellung des Ausschlusses möglicher Schadstellen im Kreislaufsystem, durch die unerwünschte Lufteinbrüche ausgelöst würden. Die zuvor angegebenen Zahlenwerte gelten hier sinngemäß für bevorzugte Unterdrucke. Zur Umrechnung der Zahlenwerte zu den Arbeitsdrucken in Pascal-Einheiten (Pa) gilt bekanntlich : 1 bar = 10⁵ Pa.

Die folgenden Beispiele sollen den Gegenstand der Erfindung näher erläutern, ohne ihn darauf einzuschränken.

### Beispiele

### Beispiel 1

In einem Versuchssprühturm im Technikumsmaßstab vom Typ "Minor Produktion" der Firma Niro-Atomizer wurde ein Slurry des Natriumsalzes einer C₁₆/C₁₈-Alpha-Sulfofettsäure mit einem Trockensubstanzgehalt von 36,5 % zu einem Tensidpulver mit dem Schüttgewicht 370 g/l umgewandelt. An dem Ausgangsslurry wurden die folgenden Kennzahlen gemessen:
Waschaktive Substanz nach Epton 26,3 %, bezogen auf Slurry.
Unsulfonierte Fettsäure 2,09 %.
Natriumsulfat 3,1 %.
Natriumchlorid 2,2 %.
Sulfiergrad 89,6 %.

Die folgenden Betriebsparameter wurden eingestellt:
Drehzahl des Rotationszerstäubers 25 000 Umdrehungen pro Minute
Dampfeintrittstemperatur um 300 °C.
Dampfaustrittstemperatur um 200 °C.
Turmunterdruck 16 mbar, (0,016 · 10⁵ Pa).
Feedpumpendruck 0,2 bar, (0,2 · 10⁵ Pa).
Feedtemperatur 80 °C.
Feedmenge 8 kg pro Stunde, während des Versprühens gesteigert bis auf 18 kg pro Stunde.
Dampfmenge etwa 500 m³ pro Stunde.

Das erhaltende Produkt hatte einen Trockensubstanzgehalt von 99,8 % und ein Schüttgewicht von 370 g/l. Es zeigte sehr günstige Auflöseeigenschaften bei Zugabe zu Wasser.

### Beispiel 2

Es wurde wie in Beispiel 1 gearbeitet. Aufgetrocknet wurde ein Slurry mit 36 % Feststoffgehalt, der das obengenannte Natriumsalz einer C₁₆/C₁₈-Alpha-Sulfofettsäure (mit Beimengungen) und Polyethylenglykol mit Molekulargewicht 2000 im Gewichtsverhältnis der Trockensubstanzen von 9 : 1 enthielt. Die Turmeintrittstemperatur lag bei 300 °C; die Austrittstemperatur bei 210 °C; alle anderen Parameter waren vergleichbar. Das Produkt wies einen Trockensubstanzgehalt von 99 Gew.-% auf; das Schüttgewicht betrug 290 g/l.

### Beispiel 3

In einem Versuchssprühturm im Technikumsmaßstab vom Typ "Minor Produktion" der Firma Niro-Atomizer wurde ein Slurry des Natriumsalzes eines C₁₆/₁₈-Fettalkoholsulfats unter Zusatz von Natriumcarbonat zu einem rieselfähigen Tensidpulver umgewandelt. Das Mischungsverhältnis zwischen dem Aniontensid und Natriumcarbonat betrug 4 : 1, bezogen auf Trockensubstanz.

Der eingesetzte wäßrige Slurry des Fettalkoholsulfats ist eine weiße bis schwach gelbe, feste Paste mit den Kenndaten:

| | | |
|---|---|---|
| Waschaktive Substanz nach Epton | 54 - 58 | Gew.-% |
| Fettalkoholsulfat | 53 - 55 | Gew.-% |
| Unsulfiertes | 1 - 3 | Gew.-% |
| Gehalt an NaCl | < = 1 Gew.-% | |
| Gehalt an Na₂SO₄ | <= 2 Gew.-% | |
| pH-Wert (3%ige wäßrige Zubereitung) | 10 - 11,5 | |

Nach Zugabe der wäßrigen Sodalösung stellte sich ein Trockensubstanzgehalt des Slurries von 47,7 Gew.-% ein.

Zur Heißdampftrocknung wurden die folgenden Betriebsparameter eingestellt:

| | |
|---|---|
| Dampfeintrittstemperatur | 250°C |
| Dampfaustrittstemperatur | 175 - 180°C |
| Turmunterdruck | 16 mbar (0,016 · 10⁵ Pa) |
| Feedpumpendruck | 5,5 bar (5,5 · 10⁵ Pa) |
| Feedtemperatur | 80°C |
| Feedmenge | 12 kg/h |
| Dampfmenge | ca. 350 m³/h |
| Treibgas der Zweistoffdüse | |
| Menge 3,3 m³/h | |
| Druck 0,2 bar (0,2 · 10⁵ Pa) | |

Das erhaltene Produkt hatte einen Trockensubstanzgehalt von 99,2 Gew.-%. Das Schüttgewicht betrug 293 g/l. Eine 90%ige Löslichkeit in Wasser bei 20°C wurde bei 40 Sekunden erreicht.

### Beispiel 4

Es wurde wie in Beispiel 3 gearbeitet. Aufgetrocknet wurde ein wäßriger Slurry mit 53,3 Gew.-% Feststoffgehalt, der sich zusammensetzte aus dem in Beispiel 1 genannten Natriumsalz eines C₁₆/₁₈-Fettalkoholsulfates und einem feinteiligen Natriumaluminiumsilikat (Zeolith NaA in Waschmittelqualität) in 48%iger Suspension, die mit 1,5 Gew.-% Talgalkoholpolyglykolether stabilisiert war. Das Mischungsverhältnis (Trockengewicht) Aniontensid zu Silikat betrug 2 : 1. Das Trockenprodukt hatte ein Schüttgewicht von 316 g/l und eine Löslichkeit (90%) von 10 Sekunden.

### Beispiel 5

Es wurde wie in Beispielen 3 und 4 gearbeitet. Aufgetrocknet wurde in der Phase des überhitzten Wasserdampfes ein Slurry mit 24,1% Feststoffgehalt. Die Feststoffbestandteile der Ausgangsmischung waren das in Beispiel 3 genannte Natriumsalz eines C₁₆/₁₈-Fettalkoholsulfates, das Di-Natriumsalz einer C₁₆/₁₈-alpha-Sulfofettsäure und Natriumcarbonat im Mischungsverhältnis 4 : 1 : 1. Das getrocknete Trägerbead-Pulver hatte ein Schüttgewicht von 220 g/l und eine Löslichkeit (90%) von 20 Sekunden.

### Beispiel 6

Verschiedene Gemische aus aniontensidischen Komponenten und wasserlöslichen anorganischen Hilfsstoffen werden in wäßriger Zubereitung gemäß den Angaben des Beispiels 3 über eine 2-Stoffdüse (Treibgas Stickstoff) versprüht und im Gegenstrom mit überhitztem Wasserdampf getrocknet.

In der nachfolgenden tabellarischen Zusammenstellung sind die eingesetzten Stoffgemische, die Mischungsverhältnisse der Komponenten in dem jeweiligen Stoffgemisch - bezogen auf Trockensubstanz -, die im Trockenprodukt erhaltenen Schüttgewichte in g/l, die Resffeuchte in Gew.-% und die Löslichkeit (90%) unter Standardbedingungen in Wasser (20°C) zusammengefaßt. Dabei gilt im einzelnen:
Sulfopon T55 (Handelsbezeichnung der Anmelderin):
Aniontensid auf C₁₆/₁₈-Fettalkoholsulfatbasis
- Sulfopon K35:: Aniontensid auf C₁₂/₁₈-Fettalkoholsulfatbasis
- Disalz:: Na-Disalz eines C₁₆/₁₈-α-Sulfofettsäuregemisches
- Texapon N70:: Na-Laurylethersulfat, ca. 2E0
- Texin ES68:: C₁₆/₁₈-α-Sulfofettsäuremethylester
- Dehydol TA40:: Talgalkohol-Ethoxylat (im Mittel 40 EO)
- Wasserglas A:: Wasserlösliches Natriumsilikat in Waschmittelqualität
- APG:: C₁₂/₁₄-Alkylglucosid (DP ca. 1,4)
- ABS:: Waschaktives Alkylbenzolsulfonat (55 Gew.-%ige wäßrige Paste)

Die nachfolgende Tabelle erfaßt die angegebenen Daten für die zum porösen Trägerbead aufgetrockneten Stoffgemische der angegebenen Art. Auffällig sind die durchweg vergleichsweise hohen Lösungsgeschwindigkeiten, die sich in den Zahlenwerten zur Löslichkeit (90%) ausdrücken, obwohl in allen Fällen beträchtliche Mengen der in Kaltwasser an sich schwer löslichen aniontensidischen Komponenten im jeweiligen Stoffgemisch vorliegen.

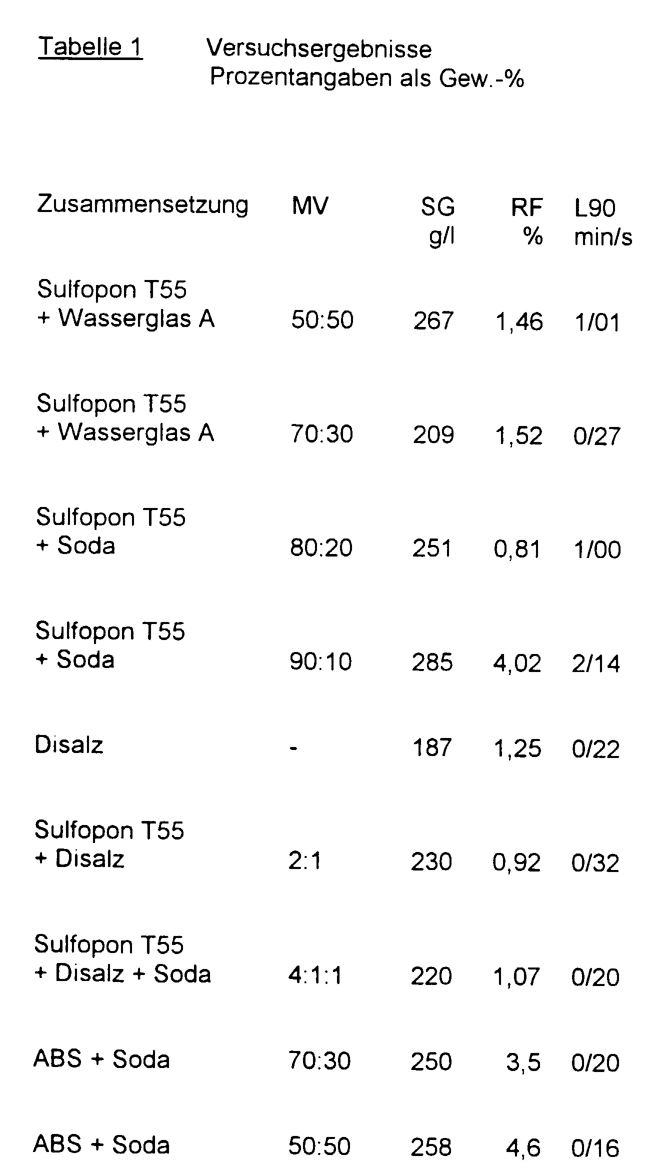

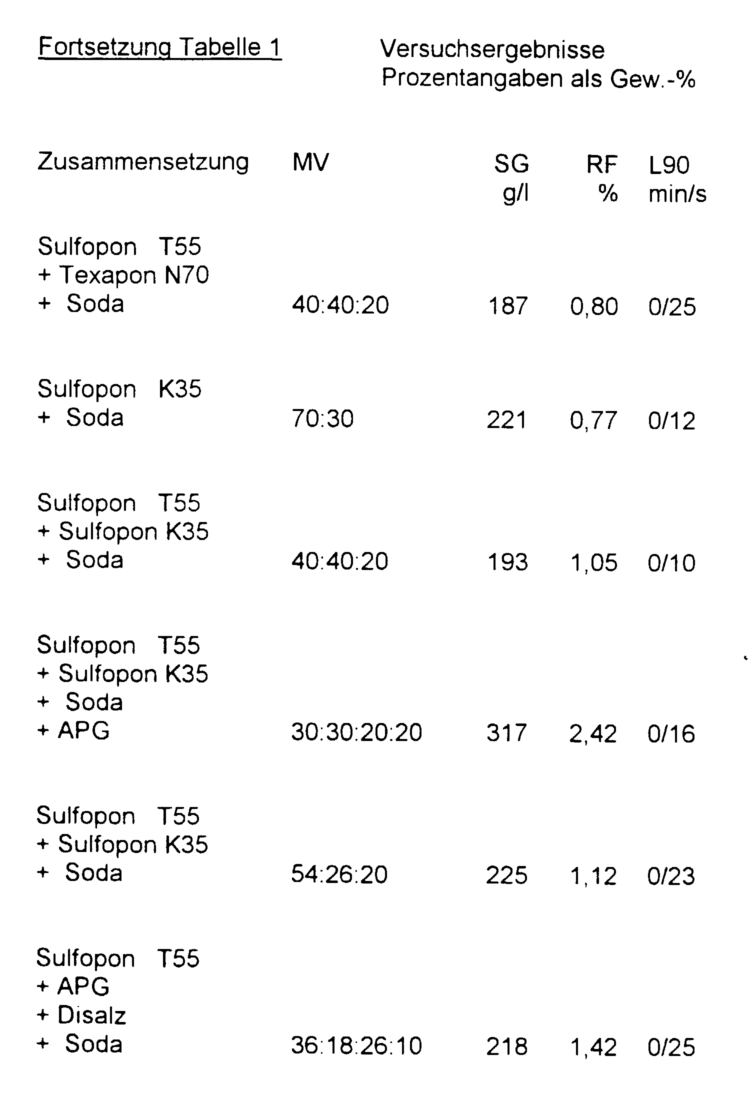

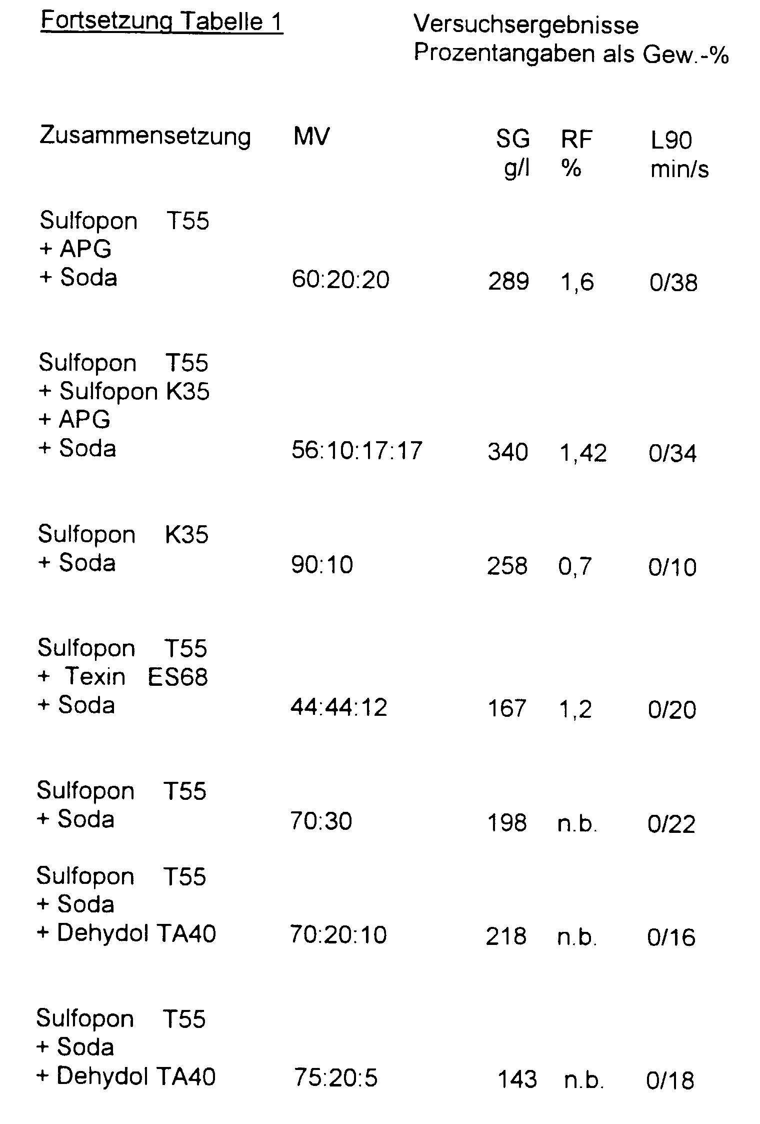

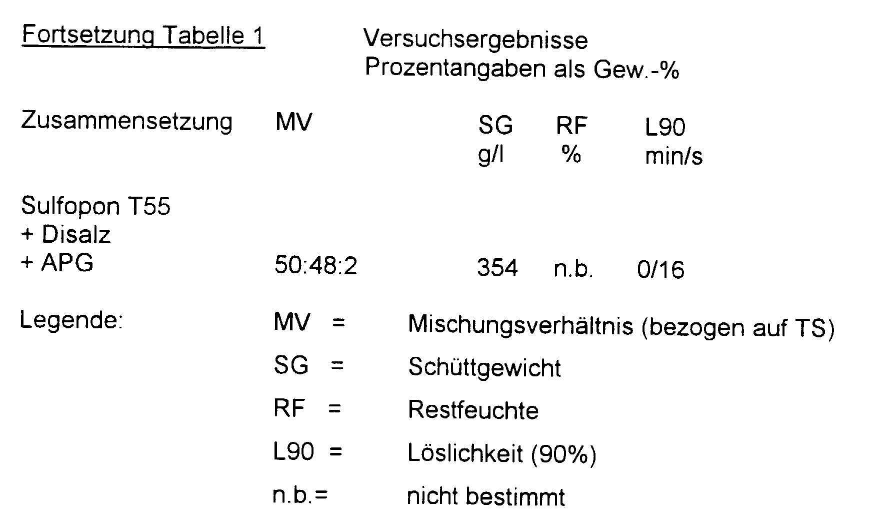

### Beispiel 7

In einem Versuchssprühturm im Technikumsmaßstab vom Typ "Minor Produktion" der Firma Niro-Atomizer wurde ein Slurry des Natriumsalzes eines C₁₆/₁₈-Fettalkoholsulfates unter Zusatz von Natriumcarbonat und Saccharose zu einem rieselfähigen Tensidpulver umgewandelt. Das Mischungsverhältnis zwischen dem Aniontensid, Natriumcarbonat und Saccharose betrug 80 : 17 : 3, bezogen auf Trockensubstanz.

Der eingesetzte wäßrige Slurry des Fettalkoholsulfates ist eine weiße bis schwach gelbe feste Paste mit den Kenndaten:

| | |
|---|---|
| Wasserhaltige Substanz nach Epton | 54 - 58% |
| Fettalkoholsulfat | 53 - 55% |
| Unsulfiertes | 1 - 3% |
| Gehalt an NaCl | < 1% |
| Gehalt an Na₂SO₄ | < 2% |
| pH-Wert (3%ige wäßrige Zubereitung) | 10 - 11,5 |

Nach Zugabe der wäßrigen Soda- und Saccharoselösungen stellte sich ein Trockensubstanzgehalt des Slurries von 47,7 Gew.-% ein.

Zur Heißdampftrocknung wurden die folgenden Betriebsparameter eingestellt:

| | |
|---|---|
| Dampfeintrittstemperatur | 340°C |
| Dampfaustrittstemperatur | 160 - 180°c |
| Turmunterdruck | 16 mbar (0,016 · 10⁵ Pa) |
| Feedpumpendruck | 7,5 bar (7,5 · 10⁵ Pa) |
| Feedtemperatur | 80°C |
| Feedmenge | 21 kg/h |
| Dampfmenge | 350 m³/h |
| Treibgas der Zweistoffdüse | |
| - Menge | 2,2 m³/h |
| - Druck | 0,3 bar (0,3 · 10⁵ Pa) |

Das erhaltene Produkt war ein weißes, geruchsneutrales Pulver mit einem Trockensubstanzgehalt von 99,2 Gew.-%. Das Schüttgewicht betrug 310 g/l. Es zeigte eine sehr gute Benetzbarkeit und ein günstiges Auflösevermögen bei Zugabe von kaltem Wasser.

### Beispiel 8

Es wurde wie in Beispiel 7 gearbeitet. Aufgetrocknet wurde eine wäßrige Zubereitung des oben genannten C₁₆/₁₈-Fettalkoholsulfates, Natriumcarbonat, Saccharose und Polyethylenglykol mit einem mittleren Molekulargewicht von 400. Das Mischungsverhältnis lag bei 80 : 14 : 3 : 3, bezüglich der Trockensubstanz. Die Feststoffe Natriumcarbonat und Saccharose sind mit 3 Teilen Wasser aufgelöst und dem Slurry zugemischt worden. Der Feedpumpendruck lag bei 4,3 bis 4,6 bar (4,3 bis 4,6 10⁵ Pa) und die Treibgasmenge der Zweistoffdüse bei 3,8 m³/h; alle anderen Parameter waren den Angaben des Beispiels 7 vergleichbar. Das Produkt wies einen Trockensubstanzgehalt von 99,3 Gew.-% auf. Das Schüttgewicht betrug 280 g/l. Das Produkt ist in Wasser gut auflösbar.

### Beispiel 9

Es wurde wie in den Beispielen 7 und 8 gearbeitet. Aufgetrocknet wurde ein Slurry des oben genannten C₁₆/₁₈-Fettalkoholsulfates, Natriumcarbonat, Saccharose und ein Talgfettalkohol mit ca. 40 Mol EO. Das Mischungsverhältnis betrug 80 : 14 : 3 : 3, bezüglich der Trockensubstanz. Natriumcarbonat und Saccharose wurden im Verhältnis 1 : 3 in Wasser aufgelöst, bevor sie dem Slurry zugemischt wurden. Der Talgfettalkohol/E040 ist vor der Zugabe aufgeschmolzen worden (Schmelzpunkt 42 bis 47 °C). Der Feedpumpendruck lag bei 3,2 bis 3,3 bar und die Treibgasmenge der Zweistoffdüse bei 3,7 m³/h. Alle anderen Parameter waren den Angaben des Beispiels 7 vergleichbar. Das Produkt wies einen Trockensubstanzgehalt von 99,2 Gew.-% auf. Das Schüttgewicht betrug 270 g/l. Das Produkt ist gut mit Wasser benetzbar bei hoher Lösungsgeschwindigkeit.

## Patentansprüche

1. Aniontensidkonzentrate in Form fester rieselfähiger Pulver und/oder Granulate, die auch als Compounds in Abmischung mit weiteren für den Einsatz in Wasch- und/oder Reinigungsmitteln geeigneten Hilfs- und /oder Wertstoffen vorliegen können und durch Auftrocknung entsprechender wasserhaltiger Zubereitungen unter Ausbildung der Pulverund/oder Granulatform hergestellt worden sind, dadurch gekennzeichnet, daß sie als staubfreies schütt- und rieselfähiges Gut ausgebildet sind, die Aniontensidverbindungen in Form ihrer wasch- und/oder reinigungsaktiven Salze bei einem Aniontensidgehalt von wenigstens 30 Gew.-% enthalten, dabei Schüttdichten von wenigstens 150 g/l aufweisen und durch Heißtrocknung der wasserhaltigen Zubereitungen mit überhitztem Wasserdampf als Trocknungsgas hergestellt worden sind, wobei das durch Sprühtrocknung einer wäßrigen Fettalkoholsulfatpaste (Wassergehalt ca. 41 Gew.-%, vermischt mit 5 Gew.-% Soda) in überhitztem Wasserdampf als Trocknungsgasstrom erhaltene Trockenprodukt mit einem Restwassergehalt von ca. 6% hier ausgeschlossen ist.

2. Aniontensidkonzentrate nach Anspruch 1, dadurch gekennzeichnet, daß sie Schüttdichten oberhalb etwa 200 g/l, vorzugsweise oberhalb etwa 300 g/l und insbesondere oberhalb 350 g/l aufweisen.

3. Aniontensidkonzentrate nach Ansprüchen 1 und 2, dadurch gekennzeichnet, daß sie durch Mitverwendung von staubbindenden Hilfs- und/oder Wertstoffen und/oder mittels Regulierung des Restwassergehaltes als staubfreies Gut ausgebildet sind.

4. Aniontensidkonzentrate nach Ansprüchen 1 bis 3, dadurch gekennzeichnet, daß ihr Restwassergehalt nicht mehr als etwa 5 Gew.-%,, vorzugsweise höchstens etwa 4 Gew.-%, beträgt und insbesondere im Bereich von etwa 1 bis 3 Gew.-%, liegt.

5. Aniontensidkonzentrate nach Ansprüchen 1 bis 4, dadurch gekennzeichnet, daß ihr Gehalt an wasch- und/oder reinigungsaktiven Aniontensiden im Bereich von 35 bis 95 Gew.-% liegt, und dabei in besonders bevorzugten Ausführungsformen der Gehalt an Aniontensidkomponenten mehr als 50 Gew.-% bezogen auf feinkörniges Feststoffgut - ausmacht.

6. Aniontensidkonzentrate nach Ansprüchen 1 bis 5, dadurch gekennzeichnet, daß sie als staubbindende Hilfs- und/oder Wertstoffe Mischungskomponenten in bevorzugt homogener Abmischung enthalten, die als solche Raumtemperatur - gegebenenfalls in Gegenwart beschränkter Restwassermengen - flüssige und/oder wenigstens klebrige Beschaffenheit besitzen und dabei bevorzugt in solchen Mengen in das Tensidkonzentrat eingearbeitet sind, daß die geforderte Staubfreiheit gewährleistet ist, ohne die Schütt- und Rieselfähigkeit nachhaltig zu behindern.

7. Aniontensidkonzentrate nach Ansprüchen 1 bis 6, dadurch gekennzeichnet, daß als staubbindende Hilfsstoffe bei Raumtemperatur wasserlösliche, wasseremulgierbare und/oder wasserquellbare monomere, oligomere und/oder polymere Mischungskomponenten wie Glycerin, Oligoglycerine, Polyethylenglykole und/oder Polypropylenglykole, Mono- und/oder Oligoglycoside beziehungsweise entsprechende Glycosidverbindungen, hier insbesondere wasch- und/oder reinigungsaktive Alkylglycosidverbindungen, wasserquellbare und/oder wasserlösliche Oligomer- und/oder Polymerverbindungen wie Polyvinylpyrrolidon (PVP), Polyvinylalkohol (PVA), Polycarboxylate beziehungsweise Cellulosederivate wie Methylcellulose, Carboxymethylcellulose, Hydroxyalkylcellulose, aber auch weitere bei Raumtemperatur und/oder in Gegenwart von Restwasser fließfähige beziehungsweise klebrige Komponenten mit Tensidcharakter, insbesondere entsprechende Niotenside, vorliegen.

8. Aniontensidkonzentrate nach Ansprüchen 1 bis 7, dadurch gekennzeichnet, daß die waschund/oder reinigungsaktiven Aniontensidverbindungen Fettalkoholsulfate (FAS), Fettalkohol-Ethersulfat (FAES), Olefin- und/oder Alkansulfonate, Fettsäureestersulfonate, insbesondere alpha-Sulfofettsäure-niedrigalkylester beziehungsweise ihre Salze, Fettsäuresulfonate, insbesondere alpha-Sulfofettsäuren bzw. ihre Salze (Di-Salze), Bernsteinsäurehalbester-Sulfonate, sulfierte Fettsäuretriglyceride und/oder Glycerin/Fettsäure-Partialester-Sulfate, gewünschtenfalls aber auch Alkylbenzolsulfonate (ABS), enthalten.

9. Aniontensidkonzentrate nach Ansprüchen 1 bis 8, dadurch gekennzeichnet, daß die waschund/oder reinigungsaktiven Aniontenside in Form ihrer Alkali- und/oder Ammoniumsalze beziehungsweise als lösliche Salze organischer Basen vorliegen.

10. Aniontensidkonzentrate nach Ansprüchen 1 bis 9, dadurch gekennzeichnet, daß wenigstens zwei unterschiedliche Aniontensid-Typen, zum Beispiel FAS und Di-Salze oder MES und Di-Salze, in bevorzugt homogener Abmischung miteinander vorliegen.

11. Aniontensidkonzentrate nach Ansprüchen 1 bis 10, dadurch gekennzeichnet, daß sie neben den Tensiden und gegebenenfalls vorliegenden organischen Mischungskomponenten in Wasser lösliche und/oder unlösliche anorganische Mischungsbestandteile, bevorzugt aus dem Bereich üblicher Bestandteile von Wasch- und/oder Reinigungsmitteln weiterhin bevorzugt ebenfalls homogen in die Pulver- und/oder Granulate eingearbeitet - enthalten.

12. Aniontensidkonzentrat nach Ansprüchen 1 bis 11, dadurch gekennzeichnet, daß sie eine saugfähige poröse Innenstruktur aufweisen, und aus ihren wässrigen Zubereitungen durch Sprüh- und/oder Wirbelschichttrocknung in überhitztem Wasserdampf hergestellt worden sind.

13. Aniontensidkonzentrate nach Ansprüchen 1 bis 12, dadurch gekennzeichnet, daß sie im Temperaturbereich von 100 bis 110°C, bevorzugt im Temperaturbereich bis 120°C, als Feststoff vorliegen, dessen Plastizität und Oberflächenklebrigkeit derart eingeschränkt sind, daß substantielle Verklebungen der Teilchen miteinander und/oder deren offenporigen Innenstruktur auch unter den Bedingungen der Einwirkung des überhitzten Wasserdampfs ausscheiden.

14. Aniontensidkonzentrate nach Ansprüchen 1 bis 13, dadurch gekennzeichnet, daß sie unter Mitverwendung von organischen und/oder anorganischen nicht-tensidischen Hilfs- und/oder Wertstoffen des angegebenen Einsatzgebietes aufgebaut sind, dabei in aufgetrockneter Form im Temperaturbereich von etwa 100 bis 110°C als Feststoff vorliegen und bevorzugt nicht-klebrige Beschaffenheit aufweisen, wobei als anorganische Mischungskomponenten insbesondere Alkalisierungsmittel wie lösliche Alkalisilikate (Wasserglas), Soda und/oder Alkalihydroxid, Builder- und/oder Co-Builderkomponenten wie Phosphate, feinteilige unlösliche Silikate, insbesondere Zeolith-Verbindungen wie Zeolith- NaA in Waschmittelqualität, oder Bentonite und//oder Kristallwasserbindende Salze, wie Natriumsulfat, vorliegen.

15. Verwendung der Aniontensidkonzentrate nach den Ansprüchen 1 bis 14, als Bestandteil von Netz-, Wasch- und/oder Reinigungsmitteln in fester Anbietungsform.

## Claims

1. Anionic surfactant concentrates in the form of solid free-flowing powders and/or granules which may also be present as compounds in admixture with other auxiliaries and/or useful materials suitable for use in detergents and/or cleaning products and which have been produced by the drying of corresponding water-based preparations to form the powders and/or granules, characterized in that they are in the form of a dust-free, pourable and free-flowing material, contain the anionic surfactant compounds in the form of their washing- and/or cleaning-active salts, their anionic surfactant content being at least 30% by weight, have apparent densities of at least 150 g/l and have been produced by hot drying of the water-containing preparations with superheated steam as the drying gas, the dry product produced by spray-drying of an aqueous fatty alcohol sulfate paste (water content about 41% by weight, mixed with 5% by weight of soda) in superheated steam as the drying gas stream containing residual water of about 6% being excluded here.

2. Anionic surfactant concentrates as claimed in claim 1, characterized in that they have apparent densities above about 200 g/l, preferably above about 300 g/l and, more preferably, above 350 g/l.

3. Anionic surfactant concentrates as claimed in claims 1 and 2, characterized in that they are in the form of a dust-free material through the co-use of dust-binding auxiliaries and/or useful materials and/or by regulation of the residual water content.

4. Anionic surfactant concentrates as claimed in claims 1 to 3, characterized in that their residual water content is no more than about 5% by weight, preferably at most about 4% by weight and, more particularly, in the range from about 1 to 3% by weight.

5. Anionic surfactant concentrates as claimed in claims 1 to 4, characterized in that they have a content of washing- and/or cleaning-active anionic surfactants of 35 to 95% by weight and, in particularly preferred embodiments, the content of anionic surfactant components makes up more than 50% by weight, based on fine-particle solids.

6. Anionic surfactant concentrates as claimed in claims 1 to 5, characterized in that they contain as the dust-binding auxiliaries and/or useful materials mixture components - preferably in the form of a homogeneous mixture - which are liquid and/or at least tacky at room temperature, optionally in the presence of limited quantities of residual water, and which are preferably incorporated in the surfactant concentrate in such quantities that the necessary freedom from dust is guaranteed without a lasting adverse effect on pourability and free flow.

7. Anionic surfactant concentrates as claimed in claims 1 to 6, characterized in that the dust-binding auxiliaries are monomeric, oligomeric and/or polymeric mixture components soluble, emulsifiable and/or swellable in water at room temperature, such as glycerol, oligoglycerols, polyethylene glycols and/or polypropylene glycols, mono- and/or oligoglycosides and corresponding glycoside compounds, more particularly washing- and/or cleaning-active alkyl glycoside compounds, water-swellable and/or water-soluble oligomer and/or polymer compounds, such as polyvinyl pyrrolidone (PVP), polyvinyl alcohol (PVA), polycarboxylates, and cellulose derivatives, such as methyl cellulose, carboxymethyl cellulose, hydroxyalkyl cellulose, and other surfactant components, more particularly corresponding nonionic surfactants, which are liquid or tacky at room temperature and/or in the presence of residual water.

8. Anionic surfactant concentrates as claimed in claims 1 to 7, characterized in that the washing- and/or cleaning-active anionic surfactant compounds are fatty alcohol sulfates (FAS), fatty alcohol ether sulfates (FAES), olefin and/or alkane sulfonates, fatty acid ester sulfonates, more particularly α-sulfofatty acid lower alkyl esters and salts thereof, fatty acid sulfonates, more particularly α-sulfofatty acids and salts thereof (disalts), succinic acid semiester sulfonates, sulfonated fatty acid triglycerides and/or glycerol/fatty acid partial ester sulfates and, if desired, alkyl benzenesulfonates (ABS).

9. Anionic surfactant concentrates as claimed in claims 1 to 8, characterized in that the washing- and/or cleaning-active anionic surfactants are present in the form of their alkali metal and/or ammonium salts or as soluble salts of organic bases.

10. Anionic surfactant concentrates as claimed in claims 1 to 9, characterized in that at least two different types of anionic surfactants, for example FAS and disalts or MES and disalts, are present in the form of preferably homogeneous mixtures with one another.

11. Anionic surfactant concentrates as claimed in claims 1 to 10, characterized in that, in addition to the surfactants and organic mixture components present, if any, they contain water-soluble and/or water-insoluble inorganic mixture components, preferably selected from typical ingredients of detergents and/or cleaning products, which are also preferably homogeneously incorporated in the powders and/or granules.

12. Anionic surfactant concentrates as claimed in claims 1 to 11, characterized in that they have an absorbent porous inner structure and have been produced from their aqueous preparations by spray drying and/or fluidized bed drying in superheated steam.

13. Anionic surfactant concentrates as claimed in claims 1 to 12, characterized in that they are present as solids at temperatures in the range from about 100 to 110°C and preferably at temperatures in the range up to about 120°C, their plasticity and surface tackiness being limited to such an extent that there is no significant adhesion of the particles to one another and/or within their open-pored inner structure, even under the conditions of exposure to the superheated steam.

14. Anionic surfactant concentrates as claimed in claims 1 to 13, characterized in that they are produced using organic and/or inorganic non-surface-active auxiliaries and/or useful materials typical of the field of application mentioned, are present as solids after drying at temperatures of about 100 to 110°C and are preferably non-tacky, the inorganic mixture components present being in particular alkalizing agents, such as soluble alkali metal silicates (waterglass), soda and/or alkali metal hydroxide, builder and/or co-builder components, such as phosphates, fine-particle insoluble silicates, more particularly zeolite compounds, such as detergent-quality zeolite NaA, or bentonites and/or salts capable of binding water of crystallization, such as sodium sulfate.

15. The use of the anionic surfactant concentrates claimed in claims 1 to 14 as a constituent of wetting agents, detergents and/or cleaning products in solid form.

## Revendications

1. Concentrés d'agents tensioactifs anioniques sous la forme de poudre et/ou de granulés aptes à l'écoulement qui peuvent exister aussi comme composés en mélange avec d'autres adjuvants et/ou matières de valeur appropriés pour l'usage dans des produits de lavage et/ou de nettoyage et qui ont été fabriqués par séchage de préparations correspondantes contenant de l'eau en réalisant la forme pulvérulente et/ou granulaire,
caractérisés en ce qu'
ils sont formés comme produit sans poussière apte au déversement et à l'écoulement qui contiennent des composés tensioactifs anioniques sous la forme de leurs sels actifs pour lavage et nettoyage avec une teneur de tensioactif anionique d'au moins 30 % en poids ils ont en outre des densités apparentes d'au moins 150 g/l et ont été fabriqués par séchage à chaud des préparations contenant de l'eau avec de la vapeur d'eau surchauffée comme gaz de séchage, tandis que le produit sec obtenu est exclu ici avec une teneur résiduelle d'eau d'environ 6 % par séchage par pulvérisation d'une pâte aqueuse de sulfate d'alcool gras (teneur en eau environ 41 % en poids, mélangé avec 5 % en poids de soude) dans de la vapeur d'eau surchauffée comme courant de gaz de séchage.

2. Concentrés d'agents tensioactifs anioniques selon la revendication 1,
caractérisés en ce qu'
ils comportent des densités apparentes au-dessus d'environ 200 g/l, de préférence au-dessus d'environ 300 g/l et en particulier au-dessus de 350 g/l.

3. Concentrés d'agents tensioactifs anioniques selon les revendications 1 et 2,
caractérisés en ce qu'
ils sont formés comme produit exempt de poussière par co-utilisation de matières de valeur et/ou d'adjuvants et/ou au moyen d'une régulation de la teneur en eau résiduelle.

4. Concentrés d'agents tensioactifs anioniques selon les revendications 1 à 3,
caractérisés en ce que
leur teneur résiduelle en eau ne monte pas plus à 5 % environ en poids, de préférence au maximum à environ 4 % en poids, et en particulier se situe au niveau d'environ 1 à 3 % en poids.

5. Concentrés d'agents tensioactifs anioniques selon les revendications 1 à 4,
caractérisés en ce que
leur teneur en tensioactifs anioniques actifs pour lavage et nettoyage se situe dans la zone de 35 à 95 % en poids et en outre la teneur en composants tensioactifs anioniques dans des formes de réalisation particulièrement préférées s'élève à plus de 50 % en poids par rapport au produit solide à grain fin.

6. Concentrés d'agents tensioactifs anioniques selon les revendications 1 à 5,
caractérisés en ce qu'
ils contiennent en tant que matières auxiliaires et/ou de valeur des composants de mélange en mélange de préférence homogène qui possèdent à la température ambiante, éventuellement en présence de quantités résiduelles d'eau limitées, une constitution liquide et/ou au moins collante et en outre de préférence sont introduites dans le concentrat tensioactif en des quantités telles que le manque de poussière requis est assuré, sans empêcher de manière permanente l'aptitude au déversement et à l'écoulement.

7. Concentrés d'agents tensioactifs anioniques selon les revendications 1 à 6,
caractérisés en ce que
comme adjuvants liants la poussière à température ambiante il existe des composants de mélange solubles dans l'eau, émulsionnables dans l'eau et/ou gonflables dans l'eau, monomères, oligomères et/ou polymères comme le glycérol et des oligoglycérol, des polyéthylèneglycols et/ou des polypropylenglycols, des mono- et/ou oligoglycosides ou des composés de glycosides correspondants, dans ce cas en particulier des composés d'alkylglycosides actifs au lavage et/ou au nettoyage, des composés oligomères et/ou polymères gonflables à l'eau et/ou solubles dans l'eau comme la polyvinylpyrrolidone (PVP), l'alcool polyvinylique (PVA), des carboxylates ou des dérivés de cellulose comme la méthylcellulose, la carboxyméthylcellulose, l'hydroxyalkylcellulose, mais aussi d'autres composants à caractère tensioactif aptes à l'écoulement ou collants à température ambiante et/ou en présence d'eau résiduelle, en particulier des tensioactifs correspondants non ioniques.

8. Concentrés d'agents tensioactifs anioniques selon les revendications 1 à 7,
caractérisés en ce que
les composés tensioactifs anioniques actifs au lavage et/ou au nettoyage contiennent des sulfates d'alcool gras (FAS), de l'éthersulfate d'alcool gras (FAES), des sulfonates d'oléfine et/ou d'alcane, des sulfonates d'esters d'acides gras, en particulier des alkylester inférieurs d'acide gras alphasulfonés ou leurs sels, des sulfonates d'acide gras, en particulier d'acides gras alphasulfonés ou leurs sels (di-sels), des demi-ester sulfonates d'acide succinique, des triglycérides d'acide gras sulfonés et/ou des estersulfates partiels d'acide gras et de glycérol, mais si on le désire aussi des sulfonates de benzène d'alkyle (ABS).

9. Concentrés d'agents tensioactifs anioniques selon les revendications 1 à 8,
caractérisés en ce que
les tensioactifs anioniques actifs au lavage et/ou au nettoyage sont présents sous forme de leurs sels alcalins et/ou d'ammonium ou comme sels aolubles de bases organiques.

10. Concentrés d'agents tensioactifs anioniques selon les revendications 1 à 9,
caractérisés en ce que
sont présents deux types de tensioactifs différents, par exemple FAS et des di-sels ou MES et des di-sels, de préférence en mélange homogène l'un avec l'autre.

11. Concentrés d'agents tensioactifs anioniques selon les revendications 1 à 10,
caractérisés en ce qu'
ils contiennent outre les tensioactifs et éventuellement des composants de mélange organique présents dans de l'eau, des composants de mélange minéraux solubles et/ou insolubles dans de l'eau, provenant de préférence du domaine des composants usuels de produits de lavage et/ou de nettoyage en outre introduits de préférence éventuellement de manière homogène dans la poudre et/ou les granulés.

12. Concentrés d'agents tensioactifs anioniques selon les revendications 1 à 11,
caractérisés en ce qu'
ils comportent une structure interne poreuse absorbante et ont été fabriqués à partir de leurs préparations aqueuses par séchage par pulvérisation et/ou séchage sur lit fluidisé dans de la vapeur surchauffée.

13. Concentrés d'agents tensioactifs anioniques selon les revendications 1 à 12,
caractérisés en ce que
dans le domaine de température de 100 à 110°C, de préférence dans la zone de température jusqu'à 120°C, ils sont présenta comme matière solide dont la plasticité et le collage superficiel sont limités de sorte que des collages substantiels des particules entre elles et/ou de leur structure interne à pores ouverts sont éliminés aussi dans les conditions de l'action de la vapeur d'eau surchauffée.

14. Concentrés d'agents tensioactifs anioniques selon les revendications 1 à 13;
caractérisés en ce qu'
ils sont structurés par co-utilisation de matières auxiliaires et de valeur non tensioactives organiques et/ou minérales du domaine d'utilisation indiqué, en outre ils sont présents sous forme séchée comme matière solide dans le domaine de température d'environ 100 à 110°C et présentent une qualité de préférence non collante, tandis que comme composants de mélange organiques sont présents des produits d'alcolinisation comme des silicates alcalins (verre soluble), de la soude et/ou de l'hydroxyde alcalin, des composants d'adjuvants et/ou de co-adjuvants comme des phosphates, des silicates insolubles finement divisés, en particulier des composés de zéolite comme la zéolite NaA dans la qualité de produit de lavage, ou des bentonites et/ou des sels liants l'eau de cristallisation, comme le sulfate de sodium.

15. Utilisation des concentrés d'agents tensioactifs anioniques selon les revendications 1 à 14, comme composants d'agents mouillants, de lavage et/ou de nettoyage sous la forme d'offre solide.
